(19)

**Europäisches Patentamt**

**European Patent Office**

**Office européen des brevets**

(11) **EP 4 679 831 A1**

(12) **EUROPEAN PATENT APPLICATION**

(43) Date of publication:
**14.01.2026 Bulletin 2026/03**

(21) Application number: **24306155.3**

(22) Date of filing: **09.07.2024**

(51) International Patent Classification (IPC):
*H04N 19/48* (2014.01)    *H04N 19/60* (2014.01)
*H04N 19/82* (2014.01)

(52) Cooperative Patent Classification (CPC):
**H04N 19/48; H04N 19/60; H04N 19/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **LE PENDU, Mikael
35700 RENNES (FR)**
• **REUZE, Kevin
35700 RENNES (FR)**
• **DE LAGRANGE, Philippe
35830 BETTON (FR)**

(74) Representative: **Interdigital
Immeuble ZEN 2
845 A, avenue des Champs Blancs
35510 Cesson-Sévigné (FR)**

(54) **INTEGER COMPUTATION OF CORRECTION BOUNDS FOR QUANTIZATION CONSTRAINED CORRECTION**

(57)    A method, performed by a video encoder or a video decoder, for correcting a transform coefficient associated with a quantization level is disclosed.

An inferior correction bound and a superior correction bound are computed from quantization step parameters, the quantization level, minimum and maximum bound offsets each equal to a ratio between an integer offset parameter and an integer power of two. A correction function is then applied to the transform coefficient based on the computed inferior and superior correction bounds.

<u>100</u>

```
┌──────────────────────────────────────────────────────────────────┐
│ Compute an inferior correction bound and a superior correction     │
│ bound from quantization step parameters, a quantization level,      │── S102
│ minimum and maximum bound offsets each equal to a ratio between     │
│ an integer offset parameter and an integer power of two             │
└──────────────────────────────────────────────────────────────────┘
                                   │
                                   ▼
┌──────────────────────────────────────────────────────────────────┐
│ Apply a correction function to the transform coefficient based on   │── S104
│ the computed inferior and superior correction bounds.               │
└──────────────────────────────────────────────────────────────────┘
```

**FIG. 11**

**Description**

TECHNICAL FIELD

At least one of the present embodiments generally relates to a method, performed by a video encoder or a video decoder, for correcting a transform coefficient associated with a quantization level.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

In one implementation, a method is disclosed that may be performed by a video encoder or a video decoder. The method is for correcting a transform coefficient associated with a quantization level. In an example, an inferior correction bound and a superior correction bound are computed from quantization step parameters, the quantization level, minimum and maximum bound offsets each equal to a ratio between an integer offset parameter and an integer power of two. A correction function may be applied to the transform coefficient based on the computed inferior and superior correction bounds.

An apparatus in a video encoder or decoder is also disclosed that is for correcting a transform coefficient associated with a quantization level. The apparatus comprises one or more processors and at least one memory coupled to said one or more processors configured to implement computing an inferior correction bound and a superior correction bound from quantization step parameters, the quantization level, minimum and maximum bound offsets each equal to a ratio between an integer offset parameter and an integer power of two.

The one or more processors are further configured to apply a correction function to the transform coefficient based on the computed inferior and superior correction bounds.

BRIEF DESCRIPTION OF THE DRAWINGS

FIG. 1 illustrates a block diagram of a system within which aspects of the present embodiments may be implemented;

FIG. 2 illustrates a block diagram of an embodiment of a video encoder;

FIG. 3 illustrates a block diagram of an embodiment of a video decoder;

FIG.4A illustrates the quantization and dequantization of a transform coefficient ;

FIG.4B illustrates the quantization and dequantization of a transform coefficient ;

FIG. 5 depicts a flowchart of a method for reconstructing an image block according to a specific example ;.

FIG. 6 depicts a flowchart of a method for correcting an image block after reconstruction and filtering according to a specific example ;

FIG. 7 illustrates an example of a correction function;

FIG. 8 illustrates another example of a correction function;

FIGs 9-10 depict flowcharts of a method for correcting an image block after reconstruction and filtering according to various examples ;

FIG. 11 depicts a method for correcting a transform coefficient associated with a quantization level using integer-based computation of inferior and superior correction bounds;

FIG. 12 depicts an integer computation of a bound of a transform coefficient associated with a quantization level;

FIG. 13 depicts a method for correcting a transform coefficient associated with a quantization level using integer-based computation of the inferior and superior correction bounds according to another example;

FIG. 14 depicts a method for correcting a transform coefficient associated with a quantization level using absolute value and sign of the quantization level;

FIG. 15 illustrates the symmetry of the quantization bound equations;

FIG. 16 depicts a method for correcting a transform coefficient associated with a quantization level using the symmetrized coefficient associated with the absolute value of the quantization level;

FIG. 17 depicts a method for correcting a transform coefficient associated with a quantization level using the symmetrized coefficient associated with the absolute value of the quantization level and with pre-selected bound offset parameters; and

FIG. 18 illustrates the integer computation of a correction bound of a filtering difference transform coefficient.

DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

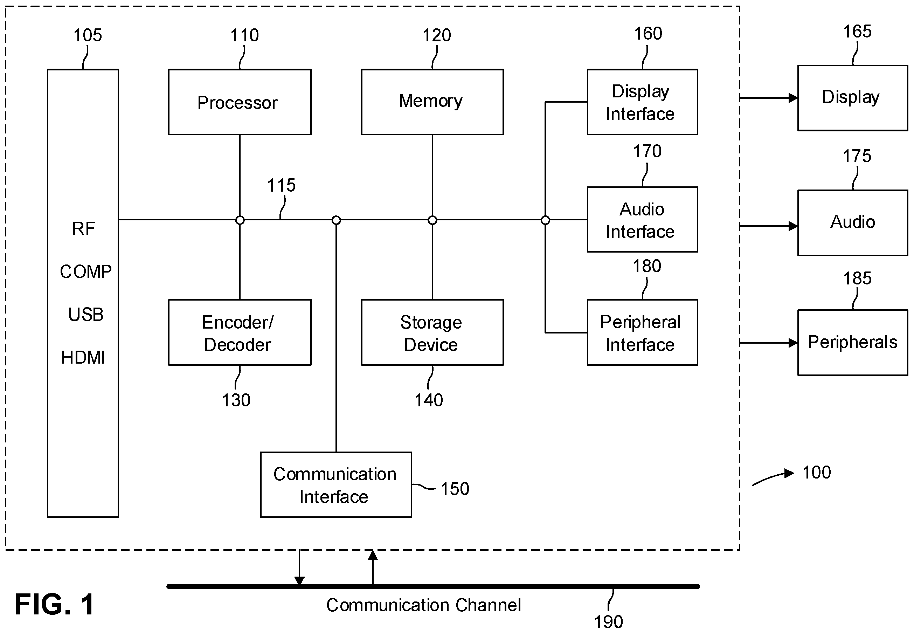

The aspects described and contemplated in this application can be implemented in many different forms. FIGs. 1, 2 and 3 below provide some embodiments, but other embodiments are contemplated and the discussion of FIGs. 1, 2 and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium (e.g. a non-transitory computer readable storage medium) having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "encoded" or "coded" may be used interchangeably, the terms "pixel" and "sample" may be used interchangeably and the terms "image," "picture" and "frame" may be used interchangeably. Usually, but not necessarily, the term "reconstructed" is used at the encoder side while "decoded" is used at the decoder side. In the present application, the terms "dequantization" and "scaling" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

For the sake of clarity, satisfying, failing to satisfy a condition and configuring condition parameter(s) are described throughout embodiments described herein as relative to a threshold (e.g., greater, or lower than), a (e.g., threshold) value, configuring the (e.g., threshold) value, etc.). For example, satisfying a condition may be described as being above a (e.g., threshold) value, and failing to satisfy a condition (e.g., performance criteria) may be described as being below a (e.g., threshold) value. Embodiments described herein are not limited to threshold-based conditions. Any kind of other condition and parameter(s) (such as e.g., belonging or not belonging to a range of values) may be applicable to embodiments described herein.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

**FIG. 1** illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 100 may be provided through various input devices as indicated in block 105. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105. As indicated above, various embodiments provide data in a non-streaming manner. Additionally, various embodiments use wireless networks other than Wi-Fi, for example a cellular network or a Bluetooth network.

The system 100 may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other device. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100. For example, a disk player performs the function of playing the output of the system 100.

In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

The embodiments can be carried out by computer software implemented by the processor 110 or by hardware, or by a combination of hardware and software. As a non-limiting example, the embodiments can be implemented by one or more integrated circuits. The memory 120 can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 can be of any type appropriate to the technical environment, and can encompass one or more of microprocessors, general purpose computers, special purpose computers, and processors based on a multi-core architecture, as non-limiting examples.

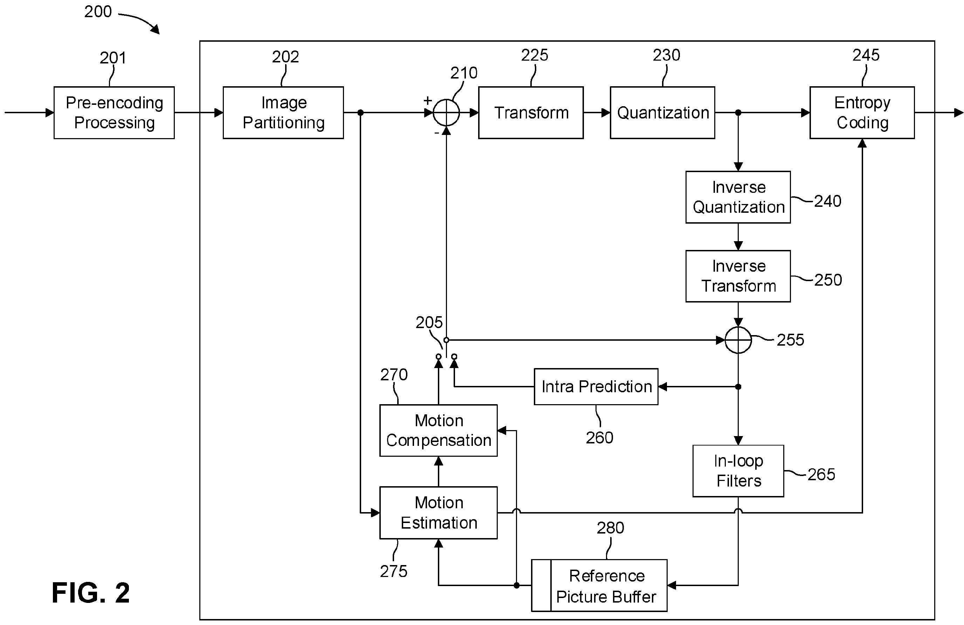

**FIG. 2** illustrates an example video encoder 200 within which aspects of the present embodiments may be implemented. Variations of example encoder 200 are contemplated, but the encoder 200 is described below for purposes of clarity without describing all expected variations. In some examples, FIG. 2 also illustrate an encoder in which improvements are made to HEVC standard or VVC standard or an encoder employing technologies similar to HEVC or VVC, such as an encoder ECM (Enhanced Compression Model) under development by JVET (Joint Video Exploration Team).

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing and attached to the bitstream.

In the encoder 200, a picture is encoded by the encoder elements as described below. The picture to be encoded is partitioned (202) and processed in units of, for example, CUs (Coding Units). Each unit is encoded using, for example, either an intra or inter mode. When a unit is encoded in an intra mode, it performs intra prediction (260), e.g. using an intra-prediction tool such as Decoder Side Intra Mode Derivation (DIMD). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block (a.k.a. prediction block) from the original image block.

The prediction residuals are then transformed (225) into transform coefficients c (a.k.a prediction residual transform coefficients) which are quantized (230) into quantization indexes $c_q$ (a.k.a transform coefficient levels or quantized transform coefficients on the encoder side). The quantization levels (a.k.a quantization indexes) $c_q$, as well as motion vectors and other syntax elements such as the picture partitioning information, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) (a.k.a. scaled) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/BIF (Bilateral Filtering)/ALF (Adaptive Loop Filter) filtering to reduce encoding artifacts. The filtered image is stored in a reference picture buffer (280). In-loop filters (265) are thus used to enhance reconstructed images before storing them in the reference picture buffer (280). In-loop filters form a whole family. Among them, deblocking filters (DBF) aim at reducing blocking artifacts occurring along block boundaries. Deblocking filters are usually designed to improve subjective quality, that is, the noticeability of such coding errors by the human psychovisual system. In usual video coding standards such as HEVC and VVC, deblocking filters are predetermined based on coding information (such as prediction modes, motion vectors, transform coefficients) and on local variations across block boundaries. On the other hand, adaptive loop filters (ALF) are learnt at encoder side in order to minimize a mean squared error with respect to source images, then the learned filter weights are encoded into the bitstream. Adaptive loop filters are usually applied at CTU-level, while deblocking filters are applied along block borders. In VVC and in ECM, the Adaptive Loop Filter (ALF) is the last in-loop filter that is applied to the reconstructed frame. It typically uses as input the samples of the reconstructed picture after all the other filters (e.g. DBF, SAO) have been applied. In some examples, the samples before deblocking filters are used as additional inputs for ALF. A final ALF sample may thus be obtained by weighting the regular ALF and the filter applied to the samples before the deblocking filter. Specifically, a filtered sample may be derived as follows :

$$\tilde{R}(x,y) = R(x,y) + \left[\sum_{i=0}^{19} c_i\big(f_{i,0} + f_{i,1}\big)\right] + \left[\sum_{i=20}^{21} c_i g_i\right] + \left[\sum_{i=22}^{N} c_i\big(h_{i,0} + h_{i,1}\big)\right]$$

where $f_{i,j}$ is a difference (e.g. a clipped difference) between a neighboring sample and a current sample $R(x,y)$, $g_i$ is a difference (e.g. a clipped difference) between an intermediate sample and the current sample $R(x,y)$ and $h_{i,j}$ is a difference (e.g. a clipped difference) between a neighboring sample before DBF and the current sample $R(x,y)$. The filter coefficients $c_i$, $i = 0, ... 24$ may be signaled in the bitstream.

The quantization of the residual coefficients may produce ringing artifacts around edges, both in still images and in moving objects in videos. Applying a bilateral filter (BIF) may significantly reduce ringing artifacts. BIF may be applied on decoded sample values directly after the inverse transform or on reconstructed samples after the deblocking filter.

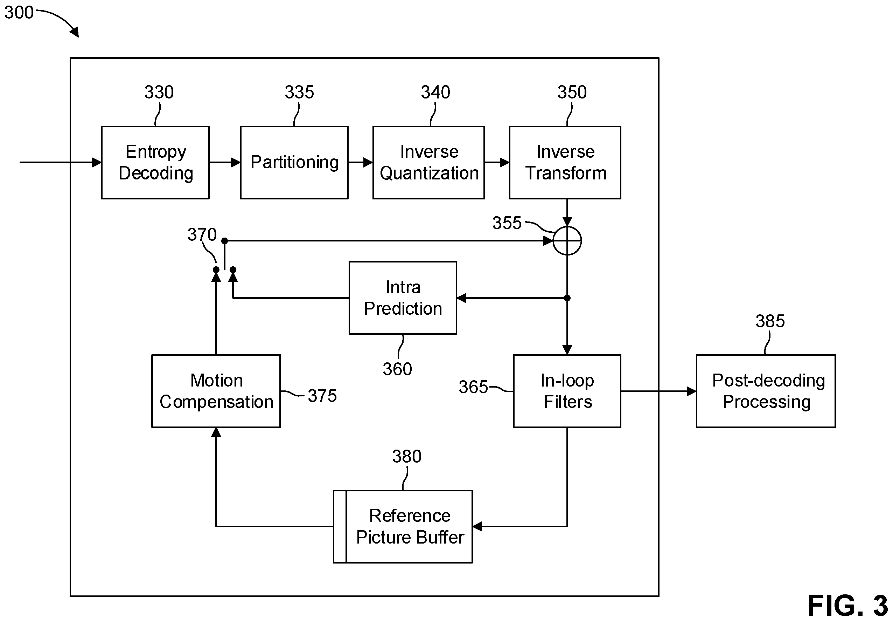

**FIG. 3** illustrates a block diagram of an example video decoder 300 within which aspects of the present embodiments may be implemented. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data. Variations of example decoder 300 are contemplated, but the decoder 300 is described below for purposes of clarity without describing all expected variations.

In particular, the input of the decoder includes a video bitstream, which can be generated by video encoder 200. The bitstream is first entropy decoded (330) to obtain quantization levels $c_q$ (a.k.a. transform coefficient levels or quantization levels on the decoder side), prediction modes, motion vectors, and other coded information. The picture partition information indicates how the picture is partitioned. The decoder may therefore divide (335) the picture according to the decoded picture partitioning information. The quantization levels $c_q$ are de-quantized (340) into reconstructed transform coefficients $c_r$. De-quantization is also named scaling. The reconstructed transform coefficients $c_r$ are inverse transformed (350) to obtain the prediction residuals. Combining (355) the prediction residuals and the predicted block (a.k.a. prediction block), an image block is reconstructed. The predicted block can be obtained (370) from intra prediction (360) or motion-compensated prediction (i.e., inter prediction) (375). In-loop filters (365), e.g., the same in-loop filters as applied on the encoder side (265), are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

HEVC and VVC standards specify conventional independent scalar quantization with Uniform Reconstruction Quantizers (URQs). The reconstructed transform coefficients $c_r$ of URQs are defined as integer multiples of a quantization step size $\Delta$ (a.k.a. quantization step) which depends on a quantization parameter (QP). This integer specifies the associated transform coefficient level, which is transmitted in the bitstream as quantization levels $c_q$ (a.k.a as quantization index). On the decoder side, given a quantization level $c_q$ and a quantization step size $\Delta$, a reconstructed transform coefficient $c_r$ may be obtained as follows :

$$c_r = Q^{-1}(c_q) = c_q \times \Delta \qquad (1)$$

On the encoder side, given a coefficient $c$ (a.k.a a transform coefficient or more precisely a prediction residual transform coefficient) and a quantization step size $\Delta$, a quantization level $c_q$ may be generated as follows :

$$c_q = Q(c) = \lfloor abs(c)/\Delta + a \rfloor \times sgn(c) \quad (2)$$

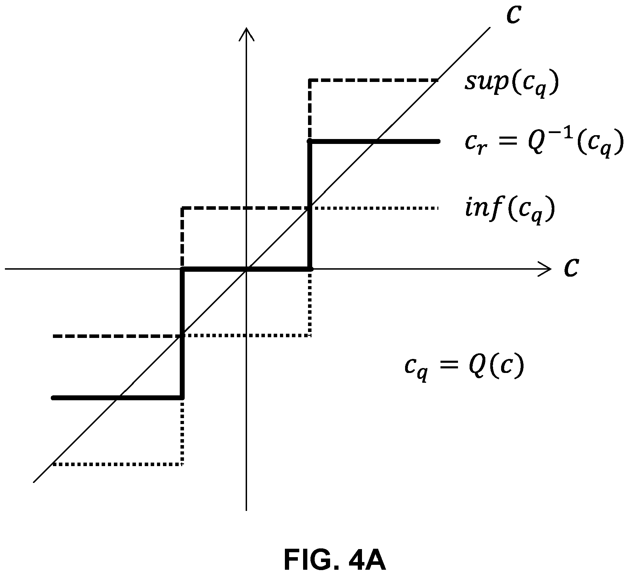

where $\lfloor \cdot \rfloor$ is a floor operation (i.e. rounding to a lower integer), *abs* is an absolute value, *sgn* is the sign function (i.e. returns 1 if c>0, -1 if c<0 and 0 if c=0), and *a* is a parameter such that 0<a<1. With this quantization method, every quantization level $c_q$ is associated with quantization bounds $inf_Q(c_q)$ and $sup_Q(c_q)$ such that an original coefficient $c$ between $inf_Q(c_q)$ and $sup_Q(c_q)$ is quantized to $c_q$. Hence, assuming this quantization method was used by the encoder, and given a quantization level $c_q$, an original coefficient $c$ associated with $c_q$ is known to be between $inf_Q(c_q)$ and $sup_Q(c_q)$, as illustrated in **FIG. 4A.** In the case of uniform quantization with quantization step size $\Delta$ and parameter *a*, the inferior and superior quantization bounds may be defined as follows:

$$inf_Q(c_q) = \begin{cases} (c_q - o_{max}) \times \Delta & if \ c_q \leq 0 \\ (c_q + o_{min}) \times \Delta & if \ c_q > 0 \end{cases} \qquad (3)$$

$$sup_Q(c_q) = \begin{cases} (c_q - o_{min}) \times \Delta & if \ c_q < 0 \\ (c_q + o_{max}) \times \Delta & if \ c_q \geq 0 \end{cases} \qquad (4)$$

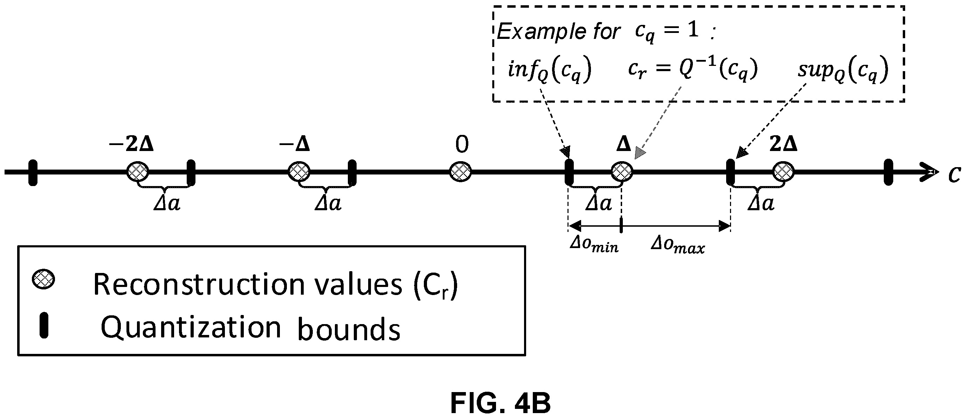

with minimum offset $o_{min}$ and maximum offset $o_{max}$. e.g., defined as $o_{min}$ = -a and $o_{max}$ = 1 - a. This parameterization of the quantization bounds and reconstruction values is further illustrated in **FIG. 4B.**

The encoder may use alternative strategies to select the quantization levels $c_q$. For example, rate distortion optimized quantization (RDOQ) optimizes the quantization levels accounting not only for the distortion (i.e., MSE), but also for the rate. In this case, it is no longer guaranteed that the original coefficients c are between the bounds $inf_Q(c_q)$ and $sup_Q(c_q)$.

In the following, c is assumed to be bounded by $inf_Q(c_q)$ and $sup_Q(c_q)$, where $inf_Q(c_q)$ and $sup_Q(c_q)$ can be determined on the decoder side knowing the quantization level $c_q$, the scalar quantizer $Q$ (a.k.a. scalar quantization operation) and its quantization parameter (QP). If the encoder uses quantization strategies that may break this assumption, such as RDOQ, the method remains applicable.

Let us define a quantization constraint by the following equation:

$$Q(c_x) = c_q \qquad (5)$$

where $Q$ is a scalar quantization operation (a.k.a scalar quantizer), $c_q$ is the quantization level of a prediction residual transform coefficient c, and $c_x$ is a reconstructed value of the corresponding transform coefficient c. When no in-loop or out-of-loop filter is applied to a reconstructed picture, each reconstructed transform coefficient $c_x$ is obtained as $c_x = c_r$. Since $c_r = Q^{-1}(c_q)$, its value is between the quantization bounds $inf(c_q)$ and $sup(c_q)$ as depicted on FIG.4A. Therefore, in this case, the quantization constraint $Q(c_r) = c_q$ is satisfied. Assuming that each quantization level is determined by the encoder as $c_q = Q(c)$, where c is the original (unquantized) coefficient, then $Q(c_r) = Q(c)$, which is a necessary condition to reconstruct the original coefficient c without error. More generally, the absolute error $|c_r - c|$ between a reconstructed coefficient and the corresponding original coefficient is such that $0 \leq |c_r - c| < sup_Q(c_q) - inf_Q(c_q)$.

However, in the case of filtering the reconstructed picture (e.g., with DBF, SAO, ALF, etc.), each coefficient $c_x$ is defined as $c_x = c_f$, where $c_f$ is the corresponding prediction residual transform coefficient of said reconstructed and filtered picture ($c_f$ may not be computed explicitly in video coding). In this case, the above quantization constraint may not be satisfied anymore by $c_x$, resulting in a loss of information. For example, the DBF filter improves the subjective quality by removing block discontinuities, but it may also remove some details in the filtered area at the borders of the blocks. As a result, for some coefficients, we may have $c_f > sup_Q(c_q)$ or $c_f < inf_Q(c_q)$, and thus $Q(c_t) \neq c_q$. Said otherwise, the quantization constraint is not necessarily satisfied in this case. This results in a sub-optimal MSE of the filtered picture since the corresponding original coefficient c is expected to be in the range $[inf_Q(c_q), sup_Q(c_q)]$. Thus, $c_f$ is necessarily different from the original coefficient c (i.e. $|c_f - c| > 0$), and the error $|c_f - c|$ is not bounded by $sup_Q(c_q) - inf_Q(c_q)$. Although the ALF filter is designed to reduce the MSE between the original and the reconstructed and filtered picture, it does not guarantee that the quantization constraint $Q(c_f) = c_q$ is satisfied for every coefficient $c_f$, hence potentially leading to sub-optimal MSE given that the quantization levels $c_q$ are known to both the encoder and the decoder.

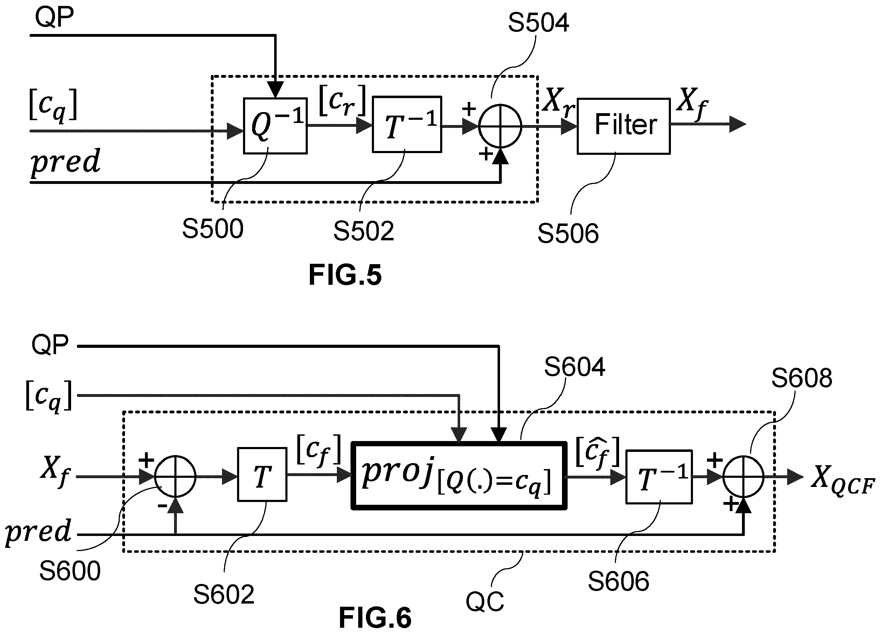

Applying a quantization-constrained correction on the prediction residual transform coefficients of the filtered picture ensures that the reconstructed and filtered picture is closer to the original picture in terms of MSE. The goal is to prevent the filters from losing information that could be inferred from the quantized transform coefficients signaled in the bitstream, while still preserving the filtering effect. To this aim, a quantization-constrained correction may be applied to an image block $X_f$ obtained by filtering a block $X_r$ previously obtained using conventional reconstruction steps in video coding, as illustrated by FIGs 5 and 6.

**FIG. 5** depicts a flowchart of a method for reconstructing an image block according to a specific embodiment.

At step S500, quantization levels $c_q$ of a current block are dequantized to obtain reconstructed coefficients $c_r = Q^{-1}(c_q)$. Each quantization level $c_q$ is assigned a position within the current block. The quantization levels $c_q$ may be obtained by entropy decoding encoded data representative of the image block to be reconstructed. In an example, the dequantization is a scalar dequantization by a dequantization function $Q^{-1}$ which is parameterized by a quantization parameter QP.

At step S502, an inverse transform $T^{-1}$ is applied to the reconstructed coefficients $c_r$ in order to obtain a prediction residual block.

At step S504, an image block $X_r$ is reconstructed as the sum of the prediction residual block obtained at step S502 and a prediction block *pred*. As mentioned with reference to FIG. 2, the prediction block *pred* may be obtained by intra prediction or motion compensation of pictures in the reference picture buffer.

At step S506, the reconstructed block $X_r$ may be filtered. The filters may be of various types, e.g. a deblocking filter, SAO, ALF, etc. The filtered block is denoted $X_f$.

**FIG. 6** depicts a flowchart of a method for correcting an image block after reconstruction and filtering according to a specific embodiment. The correction, also called quantization constrained correction and denoted QC, is applied to the image block $X_f$. The correction QC first converts $X_f$ at S600 back to prediction residuals and compute transform coefficients $c_f$ at S602 in order to correct the values of these coefficients using a correction step S604. The correction step S604 ensures that the quantization constraint $Q(\widehat{c_f}) = c_q$ is satisfied for the corrected transform coefficient $\widehat{c_f}$. The

corrected transform coefficients $\widehat{c_f}$ are then converted back at S606 to obtain the corrected block $X_{QCF}$ using the inverse transform $T^{-1}$ and the summation with the prediction block at S608. The steps of the correction QC are further detailed hereafter:

At S600, $X_f$ is converted back to prediction residuals. To this aim, the prediction block *pred* is subtracted from the filtered image block $X_f$ in order to obtain a filtered prediction residual block. The prediction *pred* is equal to the prediction used at S504 in the reconstruction stage depicted on FIG. 5. Therefore, the prediction block *pred* does not have to be computed again using the codec's prediction mechanisms. Instead, the prediction block may be stored in a buffer during the reconstruction and reused for the QC correction.

At S602, the filtered prediction residual block is then converted back to the transform domain using the forward transform *T*. In the case where several types of transforms or inverse transforms may be applied (e.g., DCT-II, DST-7, DCT-8), the QC correction uses the forward transform *T* of the same type as the inverse transform $T^{-1}$ used at S502 during the reconstruction stage. For example, if a block X is reconstructed using the inverse of the DCT-II at S502, its corresponding block (i.e. the block of transform coefficients $c_f$ obtained from $X_f$) in the QC correction is transformed with forward DCT-II. The forward transform thus produces a new block of prediction residual transform coefficients $c_f$, named more simply transform coefficients $c_f$, each located at a given position within the block. Each transform coefficient $c_f$ can thus be associated with the quantization level $c_q$ used during the reconstruction stage, and which is located at the same position within the block.

At S604, each transform coefficient $c_f$ of the block of prediction residual transform coefficients is corrected to obtain a block of corrected prediction residual transform coefficients $\widehat{c_f}$, named more simply corrected transform coefficient $\widehat{c_f}$. Its corrected version $\widehat{c_f}$ is computed as $\widehat{c_f} = proj_{[Q(.)=c_q]}(c_f)$, where $proj_{[Q(.)=c_q]}$ is a correction function (also called projection function onto the quantization constraint). This correction function ensures that the constraint $Q(\widehat{c_f}) = c_q$ is satisfied, where $c_q$ is the quantization level associated with $c_f$, and where $Q$ is the scalar quantizer associated with the scalar dequantizer $Q^{-1}$ used in the reconstruction stage at S500. The correction function can be defined as follows:

$$proj_{[Q(.)=c_q]}(c_f) = \min(\max(c_f, inf_Q(c_q)), sup_Q(c_q)) \quad (6)$$

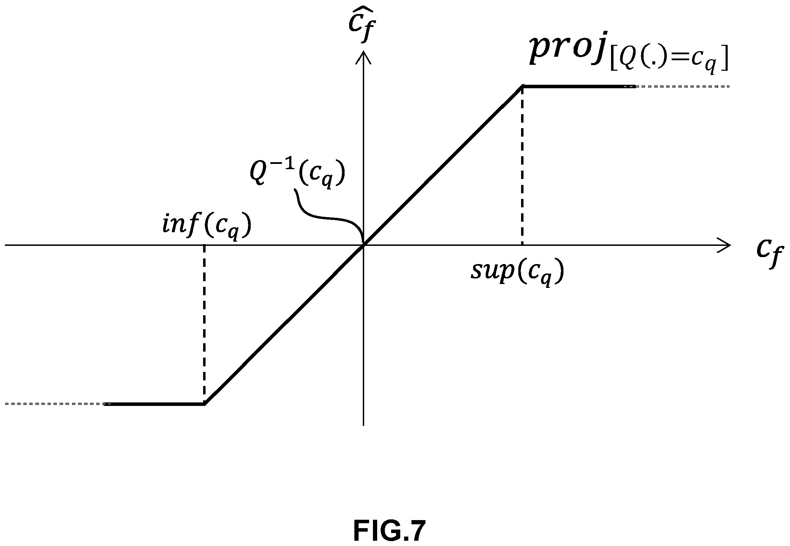

This function is a clipping function illustrated on **FIG. 7.** With this definition, each corrected transform coefficient $\widehat{c_f}$ is always between the quantization bounds $inf_Q(c_q)$ and $sup_Q(c_q)$ of the quantization level $c_q$ for the quantizer Q. Hence $\widehat{c_f}$ satisfies $Q(\widehat{c_f}) = c_q$. However, if $c_f$ is already within the quantization bounds, no correction is applied (i.e. $\widehat{c_f} = c_f$), which preserves the filtering effect.

The correction function in Equation 6 is defined to enforce the quantization constraint while also minimizing the squared error $(\widehat{c_f} - c_f)^2$ between the corrected and the uncorrected coefficient. However, other functions may be used. For example, a more general clipping function can be defined as $\widehat{c_f} = \min(\max(c_f, b_{inf}) \, b_{sup})$ where the correction bounds $b_{inf}$, $b_{sup}$ may be computed similarly to $inf_Q(c_q)$ and $sup_Q(c_q)$ using Equations 3 and 4 respectively, but where the values of the parameters $o_{min}$ and $o_{max}$ are set independently of the parameter *a*. For example, $o_{min}$ and $o_{max}$ may be pre-determined parameters known to both the encoder and decoder. Note that using $o_{min}$ and $o_{max}$ such that $-a \leq o_{min} < o_{max} \leq 1 - a$ ensures that $inf_Q(C_q) \leq b_{inf} < b_{sup} \leq sup_Q(c_q)$. Hence, assuming that $c_q$ is computed with the quantization function in Equation 2 by the encoder, using such values of $o_{min}$ and $o_{max}$ still ensures that the quantization constraint $Q(\widehat{c_f}) = c_q$ is satisfied (since $inf_Q(c_q) < b_{inf} \leq \widehat{c_f} \leq b_{sup} < sup_Q(c_q)$). If other quantization methods are used by the encoder (e.g., RDOQ), it may be difficult to enforce the constraint $Q(\widehat{c_f}) = c_q$ in practice (e.g., the quantization Q may be computationally extensive, or may involve many parameters that are unknown to the decoder). Hence, for simplicity in such cases, a correction function may still be defined as a clipping function between bounds $b_{inf}$ and $b_{sup}$. However, in rate-distortion based quantization methods such as RDOQ, the original coefficient may not be between the bounds $inf_Q(c_q)$ and $sup_Q(c_q)$ defined in Equations 3 and 4. Hence, the correction bounds $b_{inf}$, $b_{sup}$ may be computed using offset parameters $o_{min}$ and $o_{max}$ that do not necessarily satisfy the condition $-a \leq o_{min} < o_{max} \leq 1 - a$.

In another example, a smooth version of the correction function $proj_{[Q(.)=c_q]}$ may be used such as:

$$\widehat{c_f} = s \cdot \tanh\left(\frac{c_f - o}{s}\right) + o, \quad (7)$$

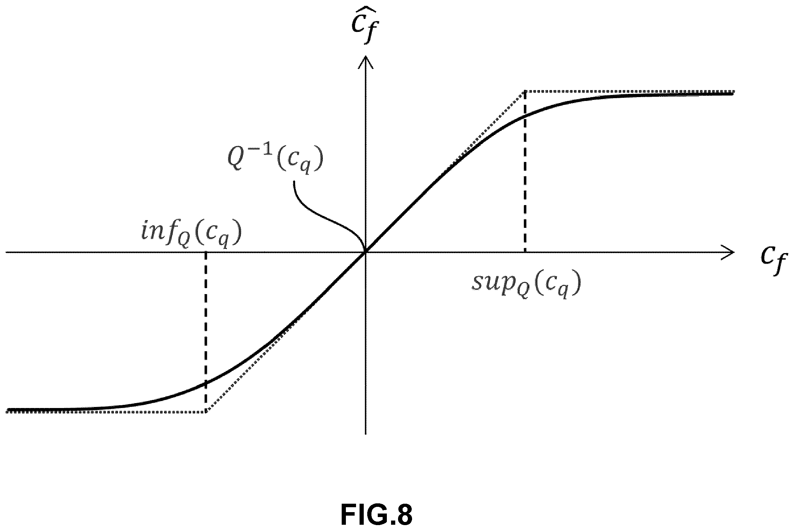

with a scale $s = \dfrac{sup_Q(c_q) - inf_Q(c_q)}{2}$ and an offset $o = \dfrac{sup_Q(c_q) + inf_Q(c_q)}{2}$. This smooth function is illustrated by **FIG. 8.** Similarly to the previous example, the correction bounds $b_{inf}$ and $b_{sup}$ may be used instead of the inferior and superior bounds $inf_Q(c_q)$ and $sup_Q(c_q)$ respectively for the computation of the scale and offset parameters s and o.

After enforcing the quantization-constraint in the residual transform domain, the corrected transform coefficients $\widehat{c_f}$ are converted back to the image domain to obtain a final corrected image block $X_{QCF}$. This is performed by first applying the inverse transform again at S606 to obtain a block of corrected prediction residuals. The same inverse transform $T^{-1}$ is used as in the reconstruction stage at S502. Finally, at S608, the prediction block *pred* is added back to the block of corrected prediction residuals to obtain a corrected image block $X_{QCF}$ which satisfies the quantization constraint.

Computing the quantization constrained correction filter on a picture region that is larger than a single transform block (e.g. CTU, picture or slice) requires the prediction of all the blocks within the region to be available. However, in conventional video coding, a prediction block is only required during the reconstruction step of the corresponding transform block. Therefore, the prediction of the full region may not be stored for later use in the conventional pipeline. Applying the QC correction filter illustrated on FIG. 6 thus requires additional storage for the prediction of the full region.

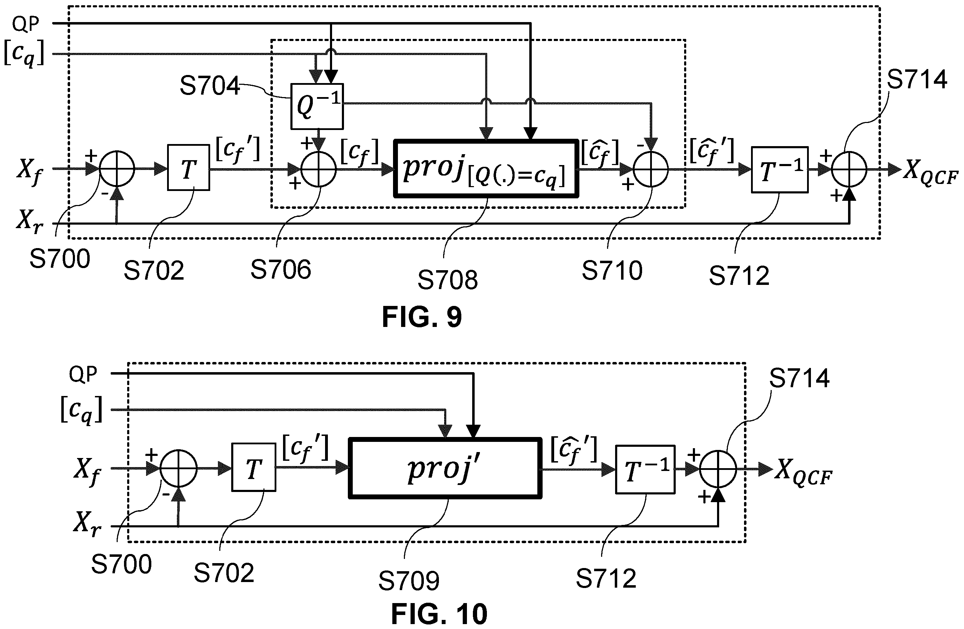

A method for decoding is described below with reference to **FIG. 9** that makes it possible to perform QC correction filtering using the non-filtered reconstructed image block $X_r$ instead of the prediction block *pred.* Since in-loop filters other than the first filter applied (i.e., DBF), such as ALF, may already use the samples before deblocking filter (i.e., samples of the non-filtered reconstructed picture), these samples can be reused when computing the proposed QC correction on the full region, without requiring additional storage. **FIG. 9** depicts a flowchart of a method for correcting an image block after reconstruction and filtering according to a specific example. Compared to the example depicted on FIG. 6, the transform coefficients $c_f$ may be computed without using the prediction block *pred* explicitly.

Instead, a block of difference transform coefficients $c_f'$ (also called filtering difference transform coefficients) may be computed first, by applying a forward transform T at S702 to a difference block obtained at S700 as the difference between the filtered image block $X_f$ and the non-filtered image block $X_r$, i.e. the reconstructed image block $X_r$ obtained prior to the filtering (S506) of FIG. 5.

Given that $X_f - X_r = (X_f - pred) - (X_r - pred),$ and assuming that the transform $T$ is a linear operation, the following equation may be derived :

$$T\left(X_f - X_r\right) = T(X_f - pred) - T(X_r - pred)$$

Since the reconstructed prediction residual block $(X_r - pred)$ is the inverse transform of the dequantized quantization levels of the block $Q^{-1}(c_q)$, the above equation can be written in the transform domain as $c_f' = c_f - Q^{-1}(c_q)$. Dequantized quantization levels of the block $Q^{-1}(c_q)$ being obtained at S704, each transform coefficient $c_f$ of the block may thus be obtained (e.g. computed) at S706 as follows:

$$c_f = c_f' + Q^{-1}(c_q) \quad (8)$$

Said otherwise, the block of transform coefficients $c_f$ is obtained by adding the block of dequantized quantization levels $Q^{-1}(c_q)$ to the block of difference transform coefficients $c_f'$. Since the reconstruction step depicted in FIG. 5 already computes the reconstructed transform coefficients $c_r$ as $c_r = Q^{-1}(c_q)$ at S500, the value of $Q^{-1}(c_q)$ may be reused instead of being recomputed within the QC correction step. Said otherwise, S704 may be bypassed, e.g. skipped.

At S708, a correction function may then be applied to the block of transform coefficients $c_f$ to obtain a corresponding block of corrected transform coefficients $\widehat{c_f}$, where the correction function may be defined for example as in Equation 6 or Equation 7. The correction function of Equation 6 corresponds to a clipping of the transform coefficients $c_f$ to ensure they are between $inf_Q(c_q)$ and $sup_Q(c_q)$ which are the quantization bounds associated with the quantization level $c_q$.

At S710, each corrected transform coefficient $\widehat{c_f}$ of the block may then be converted back to a block of corrected difference transform coefficients $\widehat{c_f}'$ (also called corrected filtering difference transform coefficients) obtained as

$$\widehat{c_f}' = \widehat{c_f} - Q^{-1}(c_q)$$

.

Said otherwise, the block of corrected difference transform coefficient $\widehat{c_f}'$ is obtained by subtracting the block of dequantized quantization levels $Q^{-1}(c_q)$ from the block of corrected transform coefficients $\widehat{c_f}$ .

At S712, the block of corrected difference transform coefficients $\widehat{c_f}'$ is inverse transformed by applying a transform $T^{-1}$ to obtain a corrected difference block. $T^{-1}$ is the inverse of the transform $T$ applied at S702.

At S714, the final corrected image block $X_{QCF}$ may then be obtained by summing the output of S712, i.e. the corrected difference block, with the non-filtered reconstructed image block $X_r$.

In a variant, the difference transform coefficients $c_f'$ may be obtained by first computing separately the transforms of the filtered image block $X_f$ and of the non-filtered reconstructed image block $X_r$. The difference transform coefficients $c_f'$ are then obtained as the difference between the transform coefficients of $X_f$ and those of $X_r$.

**FIG. 10** depicts a flowchart of a method for correcting an image block after reconstruction and filtering according to another specific example. The steps of the method that are identical to the steps of FIG. 9 are identified with the same numeral references. In particular, the method comprises the steps S700, S702, S712 and S714. In this example, the difference transform coefficients $c_f'$ may be directly corrected at S709 as $\widehat{c_f}' = proj'(c_f')$ , where *proj'* is a modified correction function that may avoid the conversion steps from $c_f'$ to $c_f$ and from $\widehat{c_f}$ to $\widehat{c_f}'$ . Following the description of FIG.9 and FIG. 10, the modified correction function *proj'* can be generally defined from the correction function $proj_{[Q(.)=c_q]}$ as follows:

$$\widehat{c_f}' = proj'(c_f') = proj_{[Q(.)=c_q]}\left(c_f' + Q^{-1}(c_q)\right) - Q^{-1}(c_q) \quad (9)$$

However, in some cases, this equation may be simplified so that the value of the dequantized quantization level $Q^{-1}(c_q)$ is not required to compute $\widehat{c_f}'$ . For example, using the correction function $proj_{[Q(.)=c_q]}$ as defined in Equation 6, the corresponding modified correction function *proj'* may be defined as follows :

$$proj'(c_f') = \min\left(\max\left(c_f', \Delta_Q^{inf}(c_q)\right), \Delta_Q^{sup}(c_q)\right) \quad (10)$$

where $\Delta_Q^{inf}(c_q)$ and $\Delta_Q^{sup}(c_q)$ are respectively the inferior and superior bounds of the filtering difference transform coefficient associated with a quantization level $c_q$. These bounds may be defined from the inferior and superior quantization bounds as $\Delta_Q^{inf}(c_q) = inf_Q(c_q) - Q^{-1}(c_q)$ and $\Delta_Q^{sup}(c_q) = sup_Q(c_q) - Q^{-1}(c_q)$ . However, the bounds $\Delta_Q^{inf}(c_q)$ and $\Delta_Q^{sup}(c_q)$ may also be directly obtained without explicitly computing the quantization bounds and the dequantized quantization level $Q^{-1}(c_q)$. For example, if/when $inf_Q(c_q)$ and $sup_Q(c_q)$ are defined according to Equations 3 and 4 respectively, and given the dequantization in Equation 1, then the computation of the bounds can be simplified as :

$$\Delta_Q^{inf}(c_q) = \begin{cases} -\Delta o_{max} & if\ c_q \leq 0 \\ +\Delta o_{min} & if\ c_q > 0 \end{cases} \quad (11)$$

$$\Delta_Q^{sup}(c_q) = \begin{cases} -\Delta o_{min} \; if \; c_q < 0 \\ +\Delta o_{max} \; if \; c_q \geq 0 \end{cases} \quad (12)$$

Hence, the value of the dequantized quantization level $Q^{-1}(c_q)$ is not needed to compute the bounds. Furthermore, in the case where $o_{max} = - o_{min}$ (e.g., using $a = 1/2$, we have $o_{max} = 1/2$ and $o_{min} = -1/2$), then we may directly compute the bounds as $\Delta_Q^{inf}(c_q) = \Delta \cdot o_{min}$ and $\Delta_Q^{sup}(c_q) = \Delta \cdot o_{max}$. In this case the bounds do not depend on the quantization level $c_q$ anymore if we consider a fixed quantization step $\Delta$ (i.e., uniform quantization).

Similar simplifications of the modified correction function *proj'* may be obtained for different equations of the correction function using the new bounds $\Delta_Q^{inf}(c_q)$ and $\Delta_Q^{sup}(c_q)$ which can be computed without using the dequantized quantization level $Q^{-1}(c_q)$. For example, considering the transform coefficient correction defined in Equation 7, the corresponding modified correction function *proj'* becomes:

$$\hat{c}_f{}' = proj'(c_f{}') = s \cdot \tanh\left(\frac{c_f{}'-o'}{s}\right) + o', \quad (13)$$

With the same scale s as in Equation 7, $s = \frac{sup_Q(c_q)-inf_Q(c_q)}{2} = \frac{\Delta_Q^{sup}(c_q)-\Delta_Q^{inf}(c_q)}{2}$, and using a modified offset $o' = \frac{\Delta_Q^{sup}(c_q)-\Delta_Q^{inf}(c_q)}{2}$.

Analogously to the original correction function in FIG. 6, the modified correction function *proj'* in FIG. 10 may be performed as $proj'(c_f{}') = \min(\max(c_f{}', b'_{inf})\; b'_{sup})$ where the correction bounds $b'_{inf}$ and $b'_{sup}$ are computed similarly to $\Delta_Q^{inf}(c_q)$ and $\Delta_Q^{sup}(c_q)$ using Equations 11 and 12 respectively, but where the values of the parameters $o_{min}$ and $o_{max}$ may have pre-determined values known to the encoder and the decoder, instead of using $o_{min} = -a$ and $o_{max} = 1 - a$.

Although the quantization step size may be allowed (e.g., in HEVC and VVC) to take non-integer values, an integer-based and division-free implementation of the dequantization is performed for more efficient computations. For that purpose, the quantization step $\Delta$ is implicitly defined as $\Delta = scale_\Delta/2^{shift_\Delta}$ where $scale_\Delta$ and $shift_\Delta$ are two integer parameters. These parameters are then used in the dequantization instead of $\Delta$. Given an integer quantization level $c_q$, the dequantization in Equation 1 is approximated by:

$$Q^{-1}(c_q) = \begin{cases} (c_q \times scale_\Delta + add) \gg shift_\Delta & if \; shift_\Delta > 0 \\ (c_q \times scale_\Delta) \ll -shift_\Delta & if \; shift_\Delta \leq 0 \end{cases} \quad (14)$$

Where >> is the rightshift operator defined for any integer m and positive integer *n* such that $m \gg n = \lfloor m/2^n \rfloor$ (with $\lfloor \cdot \rfloor$ representing the rounding to the lower integer), << is the leftshift operator defined for any integer *m* and positive integer *n* such that $m << n = m * 2^n$, and *add* is defined as $add = 1 << (shift_\Delta — 1)$.

The advantage of this method is that it can be directly implemented without division or floating-point arithmetic since rightshift and leftshift are elementary bitwise operations on integers. However, unlike the dequantization in Equation 1, the resulting dequantized value is always an integer. In the case where $shift_\Delta \leq 0$, there is no approximation error. However, if/when $shift_\Delta > 0$, the integer-based implementation approximates the result of the formula in Equation 1 with the closest integer. Although the rightshift implicitly performs a rounding to the lower integer, summing with the value *add* before applying the rightshift makes it possible to adjust the rounding strategy to the closest integer.

The dequantization process (e.g., in VVC and HEVC) determines the quantization step parameters depending on the Quantization Parameter (QP) of the block containing the coefficients to dequantize. The block size is also used to determine the quantization step parameters in order to compensate for the fact that the integer-based transform may apply different multiplication factors to the transform coefficients depending on the block size. Scaling lists may also be used to adjust the value of the scaling parameter $scale_\Delta$ depending not only on the QP and block size, but also on the coefficient position within the block of coefficients. Further adjustments of the shift parameter $shift_\Delta$ may also be performed depending on whether scaling lists are used and on whether the transform was skipped or not.

In the quantization constrained correction, e.g., as illustrated on FIGs 6, 9 and 10, the values of the correction bounds $b_{inf}$ and $b_{sup}$ are not restricted to take integer values. Indeed, they are computed from bound offsets $o_{min}$ and $o_{max}$ that are not integers in general. For example, in the case where quantization is performed by the encoder with Equation 2, the QC correction enforces the quantization constraint in Equation 5 if $o_{min}$ and $o_{max}$ are such that $-1 < -a \leq o_{min} < o_{max} \leq 1 - a < 1$. Hence typical values of $o_{min}$ and $o_{max}$ are non-integer values in the range $]-1,1[$. This is not efficient from a computation point of view.

In contrast, a method for correcting a transform coefficient is disclosed wherein a given transform coefficient $c_f$ (respectively, a filtering difference transform coefficient $c_f'$ ) is corrected by applying a correction function that uses correction bounds $b_{inf}$ and $b_{sup}$ (respectively, $b_{inf}'$ and $b_{sup}'$ ) which are computed without division (e.g., using only multiplications, additions, subtractions, and bitshift operations (i.e. rightshift and leftshift) on integers), e.g., by taking advantage of the integer parameterization of the quantization step size $\Delta$ and of the bound offsets $o_{min}$ and $o_{max}$. An integer parameterization of the bound offsets $o_{min}$ and $o_{max}$ is thus disclosed that makes it possible to compute the correction bounds $b_{inf}$ and $b_{sup}$ (respectively, $b_{inf}'$ and $b_{sup}'$ ) without any division operation. This integer-based and division-free implementation is more efficient from a computation point of view.

Various rounding strategies of the correction bounds are disclosed. In an example, the symmetry properties of the quantization are exploited to correct the transform coefficient. In an example, the computation of the correction bounds is adapted in the case where the correction bounds are used for the correction of a filtering difference transform coefficient $c_f'$ (i.e., transform coefficient of the difference between a filtered and non-filtered block) instead of a prediction residual transform coefficient (i.e., transform coefficient of a prediction residual block).

The examples allow the computation of at least one correction bound used to apply the correction function in the QC correction method but are not specific to other aspects of the QC correction (e.g., the bounds may be used to apply any correction function, such as the clipping function in FIG. 7, or the smooth correction function in FIG. 8).

The bound offsets $o_{min}$ and $o_{max}$ may be parameterized as a ratio between an integer-valued numerator and a denominator expressed as an integer power of two. More specifically, the numerator of $o_{min}$ is an integer bound offset parameter $O_0$ represented by $N_0$ bits and a starting value $start_0$, i.e., $O_0$ can take $2^{N_0}$ integer values in the range $[start_0, start_0 + 2^{N_0} - 1]$. The denominator of $o_{min}$ is equal to $2^{S_0}$ where $S_0$ is a fixed integer-valued parameter (a.k.a,

integer shift parameter). Hence, $o_{min}$ is parameterized as $o_{min} = \dfrac{O_0}{2^{S_0}}$. Similarly, the numerator of $o_{max}$ is an integer bound offset parameter $O_1$ represented by $N_1$ bits and a starting value $start_1$, i.e., $O_1$ can take $2^{N_1}$ integer values in the range $[start_1, start_1 + 2^{N_1} - 1]$. The denominator of $o_{max}$ is equal to $2^{S_1}$ where $S_1$ is a fixed integer-valued parameter.

Hence, $o_{max}$ is parameterized as $o_{max} = \dfrac{O_1}{2^{S_1}}$.

For example, the values of $S_0$ and $start_0$ may be fixed as $S_0 = N_0 - 1$ and $start_0 = -2^{S_0}$ so that the bound offset $o_{min}$ has $2^{N_0}$ possible values uniformly spaced in the range $[-1,1[$. In this case, choosing, for example, $N_0 = 10$ bits gives $S_0 = 9$ and $start_0 = -512$. Therefore, in this case, $O_0$ is a 10-bit integer in the range $[-512,511]$ and $o_{min}$ is in the range $\left[-1, \dfrac{511}{512}\right]$.

Alternatively, $S_0$ and $start_0$ may be fixed as $S_0 = N_0 - 1$ and $start_0 = 1 - 2^{S_0}$ so that $o_{min}$ has $2^{N_0}$ possible values uniformly spaced in the range $]-1,1]$. In this case, choosing, for example, $N_0 = 10$ bits gives $S_0 = 9$ and $start_0 = -511$.

Therefore, in this case, $O_0$ is a 10-bit integer in the range $[-511,512]$ and $o_{min}$ is in the range $\left[-\dfrac{511}{512}, 1\right]$.

The same ranges of values may be used for $o_{max}$ by setting $S_1 = N_1 - 1$ and $start_1 = -2^{S_1}$ or $start_1 = 1 - 2^{S_1}$.

In another example, $o_{min}$ may be in the range $]-1,0]$ and $o_{max}$ in the range $[0,1[$ by setting $S_0 = N_0$, $start_0 = 1 - 2^{S_0}$, $S_1 = N_1$ and $start_1 = 0$.

Using this integer parameterization of $o_{min}$ and $o_{max}$, and the integer parameterization of the quantization step $\Delta$ with the parameters $scale_\Delta$ and $shift_\Delta$ (i.e., $\Delta = scale_\Delta / 2^{shift_\Delta}$), the bounds $inf_Q(c_q)$ and $sup_Q(c_q)$ in Equations 3 and 4 can be decomposed as the ratio between an integer numerator and a denominator expressed as an integer power of two, as follows:

$$inf_Q(c_q) = \begin{cases} \dfrac{\left(\left(c_q * 2^{S_1}\right) - O_1\right) \times scale_\Delta}{2^{shift_\Delta + S_1}} & if \ c_q \leq 0 \\[4mm] \dfrac{\left(\left(c_q * 2^{S_0}\right) + O_0\right) \times scale_\Delta}{2^{shift_\Delta + S_0}} & if \ c_q > 0 \end{cases} \tag{15}$$

$$sup_Q(c_q) = \begin{cases} \dfrac{\left(\left(c_q * 2^{S_0}\right) - O_0\right) \times scale_\Delta}{2^{shift_\Delta + S_0}} & if \ c_q < 0 \\[4mm] \dfrac{\left(\left(c_q * 2^{S_1}\right) + O_1\right) \times scale_\Delta}{2^{shift_\Delta + S_1}} & if \ c_q \geq 0 \end{cases} \tag{16}$$

More generally, a bound $b(c_q)$ of a transform coefficient associated with a quantization level $c_q$ may be determined as the ratio between a numerator $((c_q * 2^S) + O) \times scale_\Delta$ and a denominator $2^{shift_\Delta + S}$, where $scale_\Delta$ and $shift_\Delta$ are the quantization step parameters, $O$ is an integer bound offset parameter, and S is an integer shift parameter. The values the parameters $O$ and $S$ depend on the type of bound (i.e., inferior or superior), the sign of the quantization level $c_q$, and the integer parameters $(O_0, S_0, O_1, S_1)$ of the minimum and maximum bound offsets ($o_{min}$ and $o_{max}$). Based on this decomposition, the computation can be performed using only elementary integer operations (bitshifts, multiplication, addition, subtraction), where the division by an integer power of two is performed as a bitshift operation.

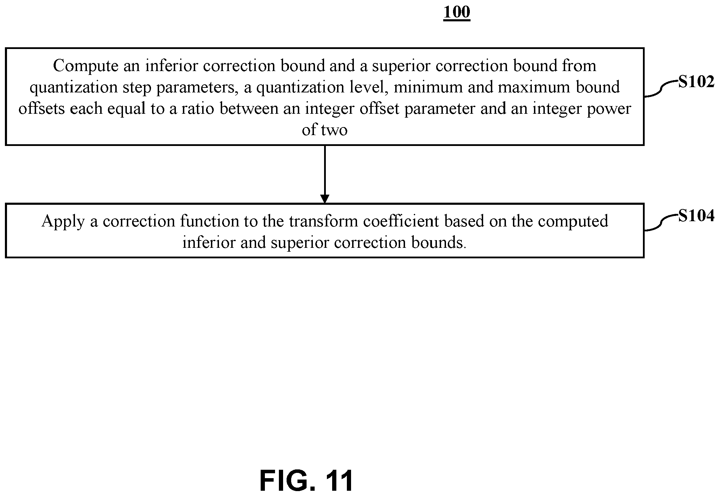

FIG. 11 depicts a method 100 for correcting a transform coefficient $c_f$ associated with a quantization level $c_q$, using integer-based computation of the inferior and superior correction bounds $b_{inf}$ and $b_{sup}$ of $c_f$.

At S102, an inferior correction bound ($b_{inf}$) and a superior correction bound ($b_{sup}$) are computed from quantization step parameters (e.g., $scale_\Delta$ and $shift_\Delta$), the quantization level ($c_q$), minimum and maximum bound offsets ($o_{min}$ and $o_{max}$) each equal to a ratio between an integer offset parameter and an integer power of two. In an example, $o_{min} = \dfrac{O_0}{2^{S_0}}$ and $o_{max} = \dfrac{O_1}{2^{S_1}}$. Advantageously, the inferior correction bound ($b_{inf}$) and the superior correction bound ($b_{sup}$) are computed without any division operations, the division by an integer power of two being performed as a bitshift operation.

At S104, a correction function is applied to the transform coefficient based on the computed inferior and superior correction bounds. In an example, the correction function is a clipping function such as the ones defined in FIG. 7 or the smooth correction function in FIG. 8.

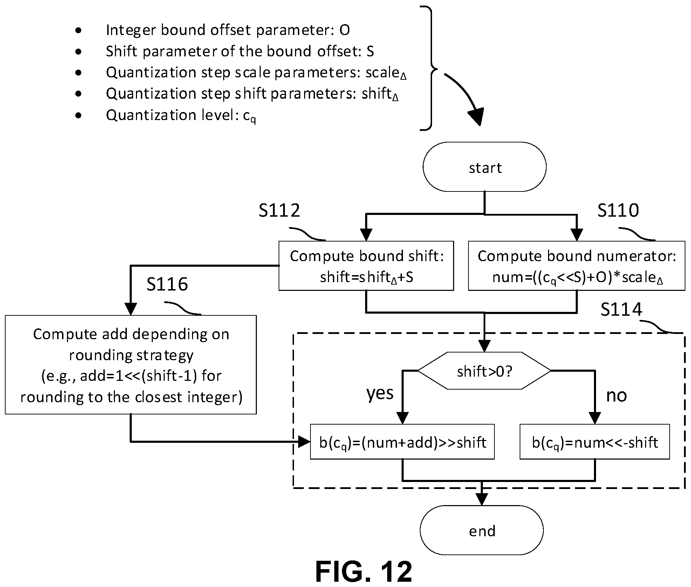

FIG. 12 depicts an integer computation of a correction bound $b(c_q)$ of a transform coefficient $c_f$ associated with a quantization level $c_q$.

Given the quantization step scale parameter $scale_\Delta$ and shift parameter $shift_\Delta$, the integer computation of a bound $b(c_q)$ of a transform coefficient $c_f$ associated with a quantization level $c_q$ is performed using an integer bound offset parameter $O$, and the corresponding integer shift parameter $S$.

The integer numerator $num$ and the denominators' integer power of two $shift$ of $b(c_q)$ are first computed at S110 and S112 respectively as:

$$num = \left(\left(c_q \ll S\right) + O\right) * scale_\Delta \tag{17}$$

$$shift = shift_\Delta + S \tag{18}$$

Then, the bound $b(c_q)$ is computed at S114 as:

$$b(c_q) = \begin{cases} (num + add) \gg shift & if \ shift > 0 \\ num \ll -shift & if \ shift \leq 0 \end{cases} \tag{19}$$

where $add$ is an integer defined at S116 depending on the rounding strategy. For example, using $add = 1 \ll (shift - 1)$, Equation 19 approximates the result of the true division $\dfrac{num}{2^{shift}}$ (e.g., as in Equation 15 or 16) with the closest integer if/when *shift* > 0. If *shift* ≤ 0, the exact result is obtained since the $\frac{num}{2^{shift}}$ already has an integer value in this case.

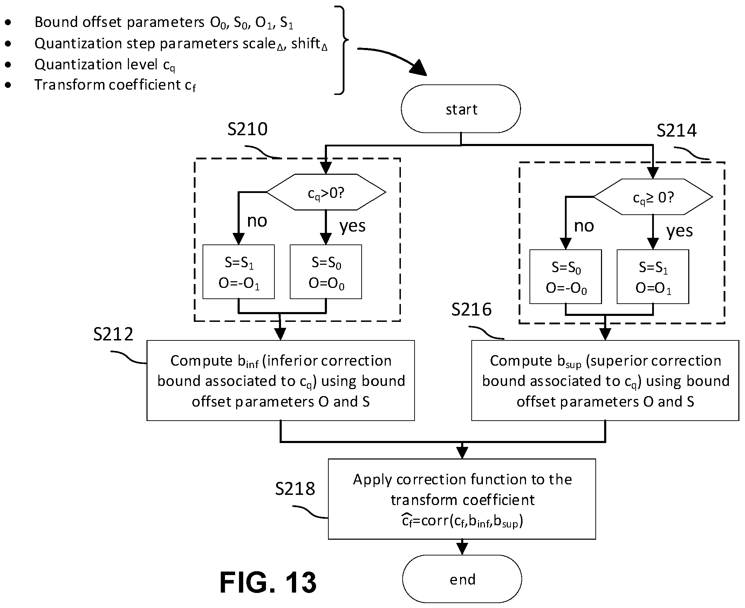

FIG. 13 depicts a method for correcting a transform coefficient $c_f$ associated with a quantization level $c_q$ using integer-based computation of the inferior and superior correction bounds $b_{inf}$ and $b_{sup}$ of $c_f$

The integer parameters $O_0$, $O_1$, $S_0$, $S_1$ of the bound offsets $o_{min}$ and $o_{max}$ and the quantization step parameters $scale_\Delta$ and $shift_\Delta$ are first obtained. In particular, the quantization step parameters may be obtained the same way as in the dequantization process. For example, $scale_\Delta$ and $shift_\Delta$ may depend on a quantization parameter QP of the block of coefficients, on the block size, and on whether the transform was skipped or not. The parameter $scale_\Delta$ may also be further adjusted using scaling lists depending on the position of the coefficient in the block.

For the computation of the inferior correction bound $b_{inf}$ at S212, an integer bound offset parameter $O$ and the corresponding integer shift parameter $S$ are obtained at S210 depending on the sign of $c_q$ as $S = S_1$ and $O = -O_1$ if $c_q \leq 0$ or $S = S_0$ and $O = O_0$ if $c_q > 0$.

In a variant, $S_1$ and $S_0$ are fixed to the same value. In this case S does not depend on $c_q$ and may be directly obtained as $S = S_0 = S_1$.

In another variant, $O_0$ and $O_1$ are set such that $O_1 = -O_0$. In this case, O does not depend on $c_q$ and may directly be obtained as $O = O_0$.

Then, the inferior correction bound $b_{inf}$ associated to $c_q$ is computed at S212 using the corresponding integer bound offset parameter $O$ and the corresponding integer shift parameter S following the steps in FIG. 12.

For the computation of the superior correction bound $b_{sup}$ at S216 the integer bound offset parameter $O$ and the corresponding integer shift parameter S are obtained at S214 depending on the sign of $c_q$ as $S = S_0$ and $O = -O_0$ if $c_q < 0$ or $S = S_1$ and $O = O_1$ if $c_q \geq 0$. In the variant where $S_1$ and $S_0$ are fixed to the same value, the value of S does not depend on $c_q$ and may be directly obtained as $S = S_0 = S_1$. In the variant where $O_0$ and $O_1$ are set such that $O_1 = -O_0$, the value of O does not depend on $c_q$ and may directly be obtained as $O = O_1$.

Then, the superior correction bound $b_{sup}$ associated to $c_q$ is computed using the corresponding integer bound offset parameter $O$ and the corresponding integer shift parameter S following the steps in FIG. 12.

Finally, using the inferior and superior correction bounds $b_{inf}$ and $b_{sup}$. the correction function is applied at S218 as

$$\widehat{c_f} = corr(c_f, b_{inf}, b_{sup})$$

.

For example, the correction function *corr* may be the clipping function in FIG. 7 defined as $corr(c_f, b_{inf}, b_{sup}) =$ min(max ($c_f$, $b_{inf}$), $b_{sup}$) or a smooth clipping function as in FIG. 8 which may be defined as

$$corr(c_f, b_{inf}, b_{sup}) = s \cdot \tanh\left(\frac{c_f - o}{s}\right) + o$$
, with $s = \frac{b_{sup} - b_{inf}}{2}$ and $o = \frac{b_{sup} + b_{inf}}{2}$.

In another example, the correction function may only clip the values above the superior correction bound, i.e., $corr(c_f, b_{inf}, b_{sup}) = \min(c_f, b_{sup})$. In this case the computation of $b_{inf}$ may be skipped. Similarly, the correction function may only clip the values below the inferior bound, i.e., $corr(c_f, b_{inf}, b_{sup}) = \max(c_f, b_{inf})$. In this case the computation of $b_{sup}$ may be skipped.

In the QC correction, rounding the correction bounds to the closest integer does not ensure that the corrected transform coefficient is between the non-integer bounds $inf_Q(c_q)$ and $sup_Q(c_q)$ in Equations 15 and 16. For instance, if $b_{sup}$ is rounded such that $b_{sup} > sup_Q(c_q)$, we may have $b_{sup} > c_f > sup_Q(c_q)$. Thus, assuming that the correction function is the clipping between $b_{inf}$ and $b_{sup}$, we have

$$\widehat{c_f} = c_f > sup_Q(c_q)$$
. This issue can be overcome by performing a rounding to the lower integer for computing $b_{sup}$ and a rounding to the higher integer for computing $b_{inf}$.

Hence in a variant, for the computation of $b_{sup}$, the value of *add* is set to 0 in Equation 19. Therefore, if *shift* > 0, $b_{sup}$ is obtained as $b_{sup} = num >> shift$, which directly performs a rounding to the lower integer.

On the other hand, rounding to the higher integer is performed for $b_{inf}$ by using *add* = (1 << *shift*) - 1 in Equation 19. Alternatively, the rounding to the higher integer of $b_{inf}$ can be obtained without the term *add* by computing $b_{inf} = -((-num) >> shift)$ in the case where *shift* > 0.

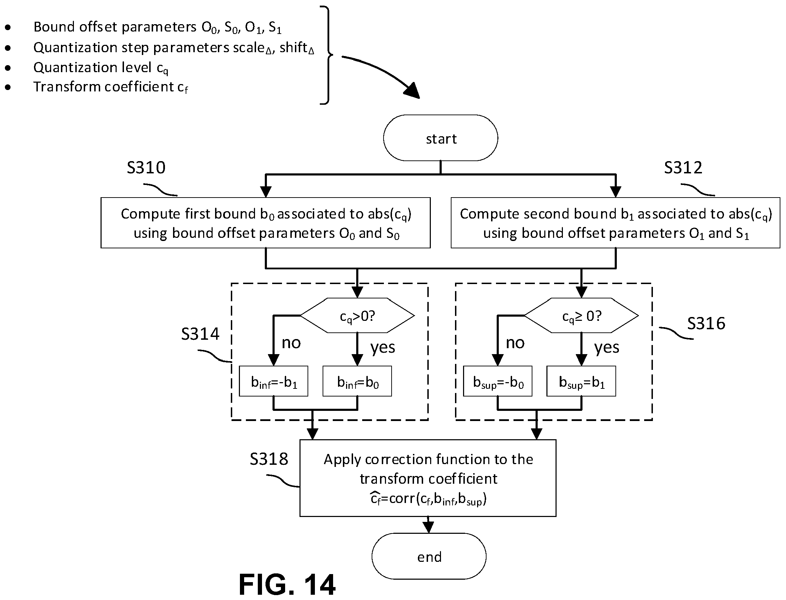

FIG. **14** depicts a method for correcting a transform coefficient $\boldsymbol{c_f}$ associated with a quantization level $\boldsymbol{c_q}$ using the absolute value and sign of $\boldsymbol{c_q}$.

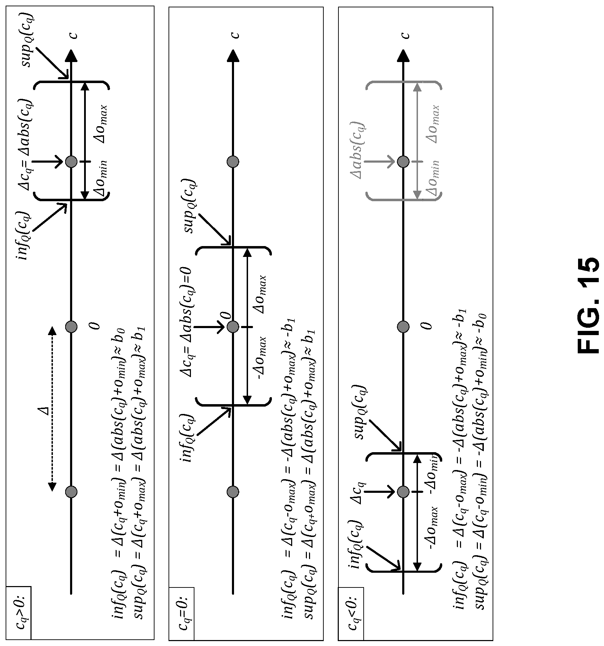

Said otherwise, the (e.g., equivalent) computation of of $b_{inf}$ and $b_{sup}$ is performed using the absolute value and the sign of the quantization level by taking advantage of the symmetry of the quantization bounds equations, as illustrated in **FIG. 15.**

A first bound $b_0$ is obtained at S310 and a second bound $b_1$ is obtained at S312, wherein the first and second bounds are associated with the absolute value of the quantization level $abs(c_q)$. They are both obtained following the steps in FIG. 12 where integer parameters $O_0$ and $S_0$ of the minimum bound offset $o_{min}$ are used for computing $b_0$, and the integer parameters $O_1$ and $S_1$ of the maximum bound offset $o_{max}$ are used for computing $b_1$. More precisely, the numerator $num_i$ of $b_i$ (where the value of $i$ is 0 or 1) is directly computed from $abs(c_q)$, as $num_i = ((abs(c_q) << S_i) + O_i) * scale_\Delta$, and the

corresponding shift is obtained as $shift_i = shift_\Delta + S_i$. Each bound $b_i$ is then computed from its numerator and its shift value

$$b_i = \begin{cases} (num_i + add_i) \gg shift_i & if \ shift_i > 0 \\ num_i \ll -shift_i & if \ shift_i \leq 0 \end{cases}$$

using Equation 19, i.e., , where $add_i$ depends on the rounding strategy. For example, using $add_i = 1 \ll (shift_i - 1)$ performs rounding to the closest integer.

The inferior and superior correction bounds $b_{inf}$ and $b_{sup}$ associated with the quantization level $c_q$ are then set using $b_0$ and $b_1$ (at S314 and S316 respectively) depending on the sign of $c_q$: if $c_q > 0$, then $b_{inf} = b_0$, otherwise $b_{inf} = -b_1$; if $c_q \geq 0$, then $b_{sup} = b_1$, otherwise $b_{sup} = -b_0$. Note that in the case where $c_q = 0$, the computation of the first bound $b_0$ may be skipped since it is not used for computing $b_{inf}$ and $b_{sup}$ in this case.

Finally, the corrected coefficient $\widehat{c_f}$ is computed at S318 by applying the correction function $corr(c_f, b_{inf}, b_{sup})$ as in S218.

In the variant where the rounding strategy comprises rounding the inferior correction bound to the higher integer and rounding the superior correction bound to the lower integer, the first bound $b_0$ is rounded to the higher integer by using $add_0 = (1 \ll shift_0) - 1$ (or alternatively computing $b_0 = -((-num_0) \gg shifto)$ in the case where $shift_0 > 0$) and the second bound $b_1$ is rounded to the lower integer by using $add_1 = 0$.

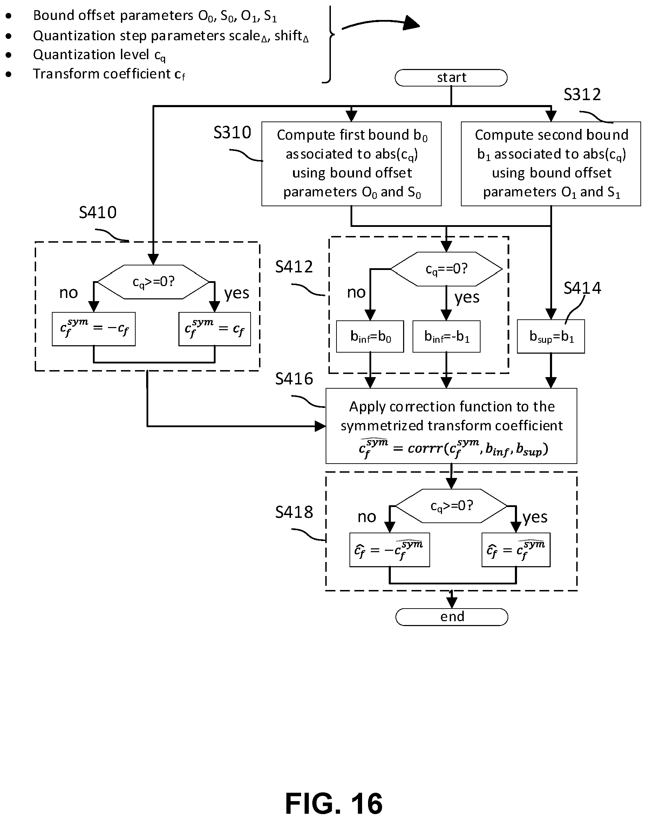

**FIG. 16** depicts a method for correcting a transform coefficient $c_f$ associated with a quantization level $c_q$ using the symmetrized coefficient $c_f^{sym}$ associated with $abs(c_q)$.

The correction is performed by correcting the symmetrized transform coefficient $c_f^{sym}$, which is computed at S410 as

$$c_f^{sym} = \begin{cases} c_f & if \ c_q \geq 0 \\ -c_f & if \ c_q < 0 \end{cases}$$

. The first and second bounds $b_0$ and $b_1$ associated to $abs(c_q)$ are computed following the same steps as in FIG. 14.

Then, the inferior and superior correction bounds of $c_f^{sym}$ are obtained as $b_{inf} = \begin{cases} -b_1 & if \ c_q = 0 \\ b_0 & otherwise \end{cases}$ at S412 and $b_{sup} = b_1$ at S414. A corrected symmetrized transform coefficient is then computed at S416 as

$$\overline{c_f^{sym}} = corr(c_f^{sym}, b_{inf}, b_{sup})$$

. Finally, the corrected transform coefficient is obtained at S418 as

$$\widehat{c_f} = \begin{cases} \overline{c_f^{sym}} & if \ c_q \geq 0 \\ -\overline{c_f^{sym}} & if \ c_q < 0 \end{cases}$$

.

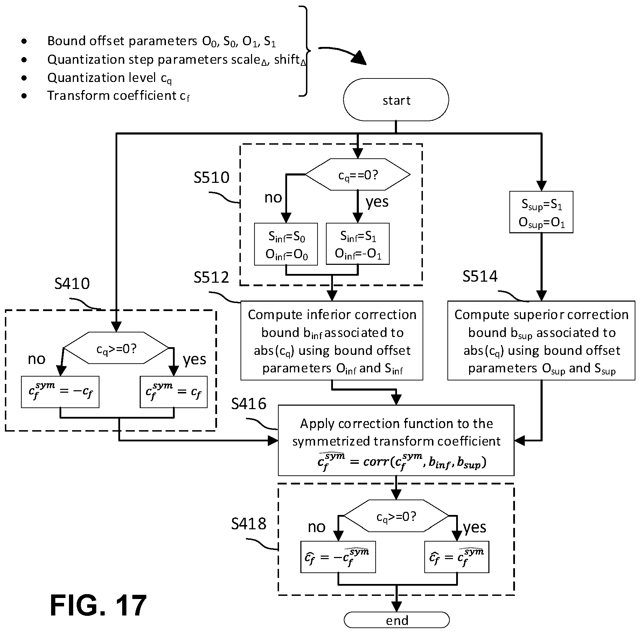

**FIG. 17** depicts a method for correcting a transform coefficient $c_f$ associated with a quantization level $c_q$ using the symmetrized coefficient $c_f^{sym}$ associated with $abs(c_q)$ and with pre-selection of the integer parameters of the bound offsets. This is a variant of the method of FIG. 16. The steps of the method of FIG. 17 identical to the steps of the method of FIG. 16 are identified with the same numerical labels. The (e.g., equivalent) computation of $b_{inf}$ and $b_{sup}$ is performed by first selecting at S510 integer parameters $O_{inf}$, $S_{inf}$ of the bound offset depending on $c_q$, such that $O_{inf} = -O_1$ and $S_{inf} = S_1$ if $c_q = 0$ or $O_{inf} = O_0$ and $S_{inf} = S_0$ otherwise. Then, the inferior correction bound $b_{inf}$ associated to $abs(c_q)$ is computed at S512 using the integer bound offset parameter $O_{inf}$ and corresponding integer shift parameter $S_{inf}$ following the steps in FIG. 12. The superior correction bound $b_{sup}$ associated to $abs(c_q)$ is computed at S514 similarly using the integer bound offset parameter $O_{sup}$ and corresponding integer shift parameter $S_{sup}$, where $O_{sup} = O_1$, and $S_{sup} = S_1$.

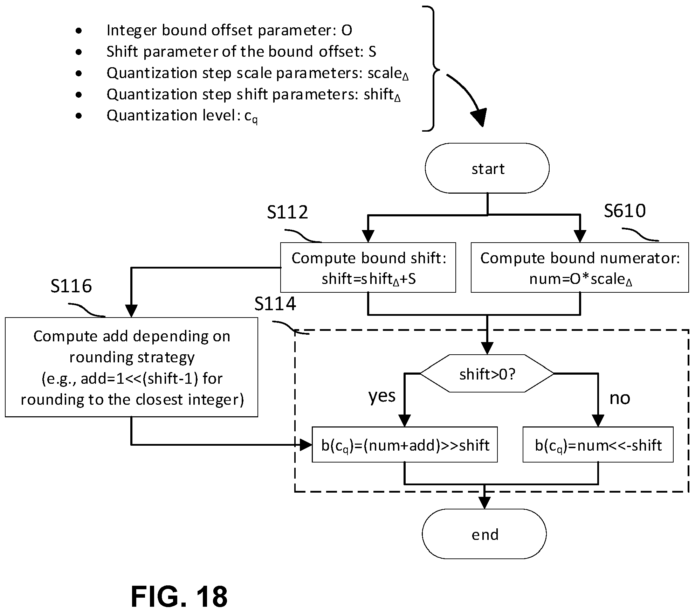

**FIG. 18** illustrates the integer computation of a correction bound $b'(c_q)$ of a filtering difference transform coefficient associated with a quantization level $c_q$.

In the case where the correction is applied to a filtering difference transform coefficient $c_f'$, the corresponding quantization bounds $\Delta_Q^{inf}(c_q)$ and $\Delta_Q^{sup}(c_q)$ are different from the quantization bounds $inf_Q(c_q)$ and $sup_Q(c_q)$ of the transform coefficient $c_f$.

From the integer parameterizations of the bound offsets (i.e., using $O_0, O_1, S_0, S_1$) and the quantization step (i.e.,

using $scale_\Delta$ and $shift_\Delta$), the bounds $\Delta_Q^{inf}(c_q)$ and $\Delta_Q^{sup}(c_q)$ defined in Equations 11 and 12 can be decomposed as the ratio between an integer numerator and a denominator expressed as an integer power of two, as follows:

$$\Delta_Q^{inf}(c_q) = \begin{cases} \dfrac{-O_1 \times scale_\Delta}{2^{shift_\Delta + S_1}} & if\ c_q \leq 0 \\ \dfrac{O_0 \times scale_\Delta}{2^{shift_\Delta + S_0}} & if\ c_q > 0 \end{cases} \qquad (20)$$

$$\Delta_Q^{sup}(c_q) = \begin{cases} \dfrac{-O_0 \times scale_\Delta}{2^{shift_\Delta + S_0}} & if\ c_q < 0 \\ \dfrac{O_1 \times scale_\Delta}{2^{shift_\Delta + S_1}} & if\ c_q \geq 0 \end{cases} \qquad (21)$$

It can be noted that the only difference with the decomposition of $inf_Q(c_q)$ and $sup_Q(c_q)$ in Equations 15 and 16 is that the numerator does not have a term depending on the value of $c_q$. Hence, a variant of the method of FIG. 12 is described in FIG. 18 for the computation of a bound $b'(c_q)$ of a filtering difference transform coefficient $c_f'$ associated with a quantization level $c_q$. Using the integer parameters $O$ and $S$ of the bound offset, the quantization parameters $scale_\Delta$ and $shift_\Delta$, and the quantization level $c_q$, the same steps S112, S114, and S116 are performed as in FIG. 12 where the numerator is computed as $num = O * scale_\Delta$ at S610 (instead of $num = ((c_q \ll S) + O) * scale_\Delta$ at S110).

The other examples for the correction of a transform coefficient $c_f$ in FIGs 13-17 can be applied similarly for the correction of a filtering difference transform coefficient $c_f'$ by using the bound computation in FIG. 18 instead of FIG. 12.

Moreover, the present aspects are not limited to ECM, VVC or HEVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Note that syntax elements as used herein, such as terms in equations and algorithms, signal labels/names, etc., such as $b_{inf}$, $b_{sup}$, $o_{min}$, $o_{max}$, and so on, are descriptive terms. As such, they do not preclude the use of other names.

Note that syntax elements as used herein, such as terms in equations and algorithms, signal labels/names, etc., such as quantization levels, and so on, are descriptive terms. As such, they do not preclude the use of other syntax element names.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, correcting a transform coefficient based on the computed inferior and superior correction bounds.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, correcting a transform coefficient based on the computed inferior and superior correction bounds.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, or a slice header), or an SEI message. Other manners are also available, including for example manners common for system level or application level standards such as putting the information into one or more of the following:

a. SDP (session description protocol), a format for describing multimedia communication sessions for the purposes of session announcement and session invitation, for example as described in RFCs and used in conjunction with RTP (Real-time Transport Protocol) transmission.

b. DASH MPD (Media Presentation Description) Descriptors, for example as used in DASH and transmitted over HTTP, a Descriptor is associated with a Representation or collection of Representations to provide additional characteristic to the content Representation.

c. RTP header extensions, for example as used during RTP streaming.

d. ISO Base Media File Format, for example as used in OMAF and using boxes which are object-oriented building blocks defined by a unique type identifier and length also known as 'atoms' in some specifications.

e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Some embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed. Further, the terms "any of" or "any one of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items.

Also, as used herein, the word "signal" refers to, among other things, indicating something to a corresponding decoder. For example, in certain embodiments the encoder signals a particular one of a plurality of quantization levels. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

A number of embodiments has been described above. Features of these embodiments can be provided alone or in any combination, across various claim categories and types.

A method, performed by a video encoder or a video decoder, for correcting a transform coefficient associated with a quantization level is disclosed. The method comprises : computing an inferior correction bound and a superior correction bound from quantization step parameters, the quantization level, minimum and maximum bound offsets each equal to a ratio between an integer offset parameter and an integer power of two; and applying a correction function to the transform coefficient based on the computed inferior and superior correction bounds.

An apparatus in a video encoder or decoder for correcting a transform coefficient associated with a quantization level is disclosed. The apparatus comprises one or more processors and at least one memory coupled to said one or more processors, wherein said one or more processors are configured to perform:

computing an inferior correction bound and a superior correction bound from quantization step parameters, the quantization level, minimum and maximum bound offsets each equal to a ratio between an integer offset parameter and an integer power of two ; and

applying a correction function to the transform coefficient based on the computed inferior and superior correction bounds.

In an example, the minimum bound offset being equal to $\dfrac{O_0}{2^{S_0}}$ and the maximum bound offset being equal to $\dfrac{O_1}{2^{S_1}}$, computing the inferior correction bound comprises computing the inferior correction bound as (num+add)»shift if shift >0 and as num«-shift otherwise, wherein shift=shift$_\Delta$+S and num=(($c_q$<<S)+O)*scale$_\Delta$ with S=$S_0$ and O=$O_0$ in case cq > 0 and with S=$S_1$ and O=-$O_1$ otherwise, where $c_q$ is the quantization level, add is an integer defined depending on a rounding strategy, shift$_\Delta$ is a quantization step shift and scale$_\Delta$ is a quantization step scale. In an example, the minimum bound offset being equal to $\dfrac{O_0}{2^{S_0}}$ and the maximum bound offset being equal to $\dfrac{O_1}{2^{S_1}}$, computing the superior correction bound comprises computing the superior correction bound as (num+add)»shift if shift >0 and as num<<-shift otherwise, wherein shift=shift$_\Delta$+S and num=(($c_q$<<S)+O)*scale$_\Delta$ with S=$S_1$ and O=Oi in case cq $\geq$ 0 and with S=$S_0$ and O=-$O_0$ otherwise, where $c_q$ is the quantization level, add is an integer defined depending on a rounding strategy, shift$_\Delta$ is a quantization step shift and scale$_\Delta$ is a quantization step scale.

In an example, the minimum bound offset being equal to $\dfrac{O_0}{2^{S_0}}$ and the maximum bound offset being equal to $\dfrac{O_1}{2^{S_1}}$, computing the inferior correction bound comprises :

computing a first bound as (num+add)>>shift if shift >0 and as num<<-shift otherwise, wherein shift=shift$_\Delta$+S and num=((abs($c_q$)<<S)+O)*scale$_\Delta$ with S=$S_0$ and O=$O_0$, where $c_q$ is the quantization level, add is an integer defined depending on a rounding strategy, shift$_\Delta$ is a quantization step shift and scale$_\Delta$ is a quantization step scale;
computing a second bound (b 1) as (num+add)>>shift if shift >0 and as num<<-shift otherwise, with S=Si and O=$O_1$; and
setting the inferior correction bound equal to the first bound if $c_q$ >0 and to the opposite of the second bound otherwise.

In an example, the minimum bound offset being equal to $\dfrac{O_0}{2^{S_0}}$ and the maximum bound offset being equal to $\dfrac{O_1}{2^{S_1}}$, computing the superior correction bound comprises :

computing a first bound as (num+add)>>shift if shift >0 and as num<<-shift otherwise, wherein shift=shift$_\Delta$+S and num=((abs($c_q$)<<S)+O)*scale$_\Delta$ with S=$S_0$ and O=$O_0$, where cq is the quantization level, add is an integer defined depending on a rounding strategy, shift$_\Delta$ is a quantization step shift and scale$_\Delta$ is a quantization step scale;
computing a second bound (b 1) as (num+add)>>shift if shift >0 and as num<<-shift otherwise, with S=Si and O=$O_1$; and
setting the superior correction bound equal to the second bound if $c_q$ $\geq$0 and to the opposite of the first bound otherwise.

In an example, applying a correction function to the transform coefficient based on the computed inferior and superior correction bounds comprises applying the correction function to a symmetrized coefficient based on the computed inferior and superior correction bounds, the symmetrized coefficient being equal to the transform coefficient if the quantization level is greater than or equal to zero and to the opposite of the transform coefficient otherwise.

In an example, the minimum bound offset being equal to $\dfrac{O_0}{2^{S_0}}$ and the maximum bound offset being equal to $\dfrac{O_1}{2^{S_1}}$, computing the inferior and superior correction bounds comprises :

computing a first bound as (num+add)>>shift if shift >0 and as num<<-shift otherwise, wherein shift=shift$_\Delta$+S and

num=((abs($c_q$)<<S)+O)*scale$_\Delta$ with S=$S_0$ and O=$O_0$, where $c_q$ is the quantization level, add is an integer defined depending on a rounding strategy, shift$_\Delta$ is a quantization step shift and scale$_\Delta$ is a quantization step scale;

computing a second bound as (num+add)>>shift if shift >0 and as num<<-shift otherwise, with S=Si and O=$O_1$; and

setting the superior correction bound equal to the second bound and setting the inferior correction bound to the opposite of the second bound if $c_q$ is null and to the first bound otherwise.

In an example, the minimum bound offset being equal to $\dfrac{O_0}{2^{S_0}}$ and the maximum bound offset being equal to $\dfrac{O_1}{2^{S_1}}$, computing inferior and superior correction bounds comprises :

computing the superior correction bound as (num+add)»shift if shift >0 and as num«-shift otherwise, wherein shift=shift$_\Delta$+S and num=((abs($c_q$)<<S)+O)*scale$_\Delta$ with S=Si and O=Oi,

where $c_q$ is the quantization level, add is an integer defined depending on a rounding strategy,

shift$_\Delta$ is a quantization step shift and scale$_\Delta$ is a quantization step scale; and

computing the inferior correction bound as (num+add)»shift if shift >0 and as num«-shift otherwise, with S=Si and O=-Oi if $c_q$ is null and with S=$S_0$ and O=$O_0$ otherwise.

In an example, in a case where the correction function is applied to a filtering difference transform coefficient, num is set equal to O*scale$_\Delta$ instead of num=((abs($c_q$)<<S)+O)*scale$_\Delta$. In an example, *add* = 1 << (*shift* - 1) for computing both the inferior and superior correction bounds or add is set to 0 for calculating the superior correction bound and to (1 << *shift*) - 1 for calculating the inferior correction bound.

In an example, *add* = 1 << (*shift* - 1) for computing both the first and second bounds or add is set to 0 for calculating the second bound and to (1 << *shift*) - 1 for calculating the first bound.

## Claims

1. A method, performed by a video encoder or a video decoder, for correcting a transform coefficient associated with a quantization level comprising :

   computing an inferior correction bound and a superior correction bound from quantization step parameters, the quantization level, minimum and maximum bound offsets each equal to a ratio between an integer offset parameter and an integer power of two ; and

   applying a correction function to the transform coefficient based on the computed inferior and superior correction bounds.

2. The method of claim 1, wherein the minimum bound offset being equal to $\dfrac{O_0}{2^{S_0}}$ and the maximum bound offset being equal to $\dfrac{O_1}{2^{S_1}}$, computing the inferior correction bound comprises computing the inferior correction bound as (num+add)»shift if shift >0 and as num<<-shift otherwise, wherein shift=shift$_\Delta$+S and num=(($c_q$<<S)+O)*scale$_\Delta$ with S=$S_0$ and O=$O_0$ in case cq > 0 and with S=$S_1$ and O=-$O_1$ otherwise, where $c_q$ is the quantization level, add is an integer defined depending on a rounding strategy, shift$_\Delta$ is a quantization step shift and scale$_\Delta$ is a quantization step scale.

3. The method of claim 1 or 2, wherein the minimum bound offset being equal to $\dfrac{O_0}{2^{S_0}}$ and the maximum bound offset being equal to $\dfrac{O_1}{2^{S_1}}$, computing the superior correction bound comprises computing the superior correction bound as (num+add)>>shift if shift >0 and as num<<-shift otherwise, wherein shift=shift$_\Delta$+S and num=(($c_q$<<S)+O)*scale$_\Delta$ with S=$S_1$ and O=$O_1$ in case cq $\geq$ 0 and with S=$S_0$ and O=-$O_0$ otherwise, where $c_q$ is the quantization level, add is an integer defined depending on a rounding strategy, shift$_\Delta$ is a quantization step shift and scale$_\Delta$ is a quantization step scale.

4. The method of claim 1, wherein the minimum bound offset being equal to $\dfrac{O_0}{2^{S_0}}$ and the maximum bound offset being

equal to $\dfrac{O_1}{2^{S_1}}$, computing the inferior correction bound comprises :

computing a first bound as (num+add)>>shift if shift >0 and as num<<-shift otherwise, wherein shift=shift$_\Delta$+S and num=((abs(c$_q$)<<S)+O)*scale$_\Delta$ with S=S$_0$ and O=O$_0$, where c$_q$ is the quantization level, add is an integer defined depending on a rounding strategy, shift$_\Delta$ is a quantization step shift and scale$_\Delta$ is a quantization step scale;
computing a second bound (b1) as (num+add)>>shift if shift >0 and as num<<-shift otherwise, with S=Si and O=O$_1$; and
setting the inferior correction bound equal to the first bound if c$_q$ >0 and to the opposite of the second bound otherwise.

5. The method of claim 1 or 4, wherein the minimum bound offset being equal to $\dfrac{O_0}{2^{S_0}}$ and the maximum bound offset being equal to $\dfrac{O_1}{2^{S_1}}$, computing the superior correction bound comprises :

computing a first bound as (num+add)>>shift if shift >0 and as num<<-shift otherwise, wherein shift=shift$_\Delta$+S and num=((abs(c$_q$)<<S)+O)*scale$_\Delta$ with S=S$_0$ and O=O$_0$, where cq is the quantization level, add is an integer defined depending on a rounding strategy, shift$_\Delta$ is a quantization step shift and scale$_\Delta$ is a quantization step scale;
computing a second bound as (num+add)>>shift if shift >0 and as num<<-shift otherwise, with S=Si and O=O$_1$; and
setting the superior correction bound equal to the second bound if c$_q$ $\geq$0 and to the opposite of the first bound otherwise.

6. The method of any one of claims 1 to 5, wherein applying a correction function to the transform coefficient based on the computed inferior and superior correction bounds comprises applying the correction function to a symmetrized coefficient based on the computed inferior and superior correction bounds, the symmetrized coefficient being equal to the transform coefficient if the quantization level is greater than or equal to zero and to the opposite of the transform coefficient otherwise.

7. The method of claim 6, wherein the minimum bound offset being equal to $\dfrac{O_0}{2^{S_0}}$ and the maximum bound offset being equal to $\dfrac{O_1}{2^{S_1}}$, computing the inferior and superior correction bounds comprises :

computing a first bound as (num+add)>>shift if shift >0 and as num<<-shift otherwise, wherein shift=shift$_\Delta$+S and num=((abs(c$_q$)<<S)+O)*scale$_\Delta$ with S=S$_0$ and O=O$_0$, where c$_q$ is the quantization level, add is an integer defined depending on a rounding strategy, shift$_\Delta$ is a quantization step shift and scale$_\Delta$ is a quantization step scale;
computing a second bound as (num+add)>>shift if shift >0 and as num<<-shift otherwise, with S=Si and O=O$_1$; and
setting the superior correction bound equal to the second bound and setting the inferior correction bound to the opposite of the second bound if c$_q$ is null and to the first bound otherwise.

8. The method of claim 6, wherein the minimum bound offset being equal to $\dfrac{O_0}{2^{S_0}}$ and the maximum bound offset being equal to $\dfrac{O_1}{2^{S_1}}$, computing inferior and superior correction bounds comprises :

computing the superior correction bound as (num+add)>>shift if shift >0 and as num«-shift otherwise, wherein shift=shift$_\Delta$+S and num=((abs(c$_q$)<<S)+O)*scale$_\Delta$ with S=Si and O=O$_1$, where c$_q$ is the quantization level, add is an integer defined depending on a rounding strategy, shift$_\Delta$ is a quantization step shift and scale$_\Delta$ is a quantization step scale; and
computing the inferior correction bound as (num+add)»shift if shift >0 and as num<<-shift otherwise, with S=Si and O=-Oi if c$_q$ is null and with S=S$_0$ and O=O$_0$ otherwise.

9. The method of any one of claims 2 to 8, wherein in a case where the correction function is applied to a filtering difference transform coefficient, num is set equal to $O*scale_\Delta$.

10. An apparatus in a video encoder or decoder for correcting a transform coefficient associated with a quantization level comprising one or more processors and at least one memory coupled to said one or more processors, wherein said one or more processors are configured to perform:

   computing an inferior correction bound and a superior correction bound from quantization step parameters, the quantization level, minimum and maximum bound offsets each equal to a ratio between an integer offset parameter and an integer power of two ; and
   applying a correction function to the transform coefficient based on the computed inferior and superior correction bounds.

11. The apparatus of claim 10, wherein the minimum bound offset being equal to $\dfrac{O_0}{2^{S_0}}$ and the maximum bound offset being equal to $\dfrac{O_1}{2^{S_1}}$ , computing the inferior correction bound comprises computing the inferior correction bound as (num+add)>>shift if shift >0 and as num<<-shift otherwise, wherein shift=$shift_\Delta$+S and num=$((c_q<<S)+O)*scale_\Delta$ with S=$S_0$ and O=$O_0$ in case cq > 0 and with S=$S_1$ and O=-$O_1$ otherwise, where $c_q$ is the quantization level, add is an integer defined depending on a rounding strategy, $shift_\Delta$ is a quantization step shift and $scale_\Delta$ is a quantization step scale.

12. The apparatus of claim 10 or 11, wherein the minimum bound offset being equal to $\dfrac{O_0}{2^{S_0}}$ and the maximum bound offset being equal to $\dfrac{O_1}{2^{S_1}}$ , computing the superior correction bound comprises computing the superior correction bound as (num+add)>>shift if shift >0 and as num<<-shift otherwise, wherein shift=$shift_\Delta$+S and num=$((c_q<<S)+O)*scale_\Delta$ with S=Si and O=$O_1$ in case cq $\geq$ 0 and with S=$S_0$ and O=-$O_0$ otherwise, where $c_q$ is the quantization level, add is an integer defined depending on a rounding strategy, $shift_\Delta$ is a quantization step shift and $scale_\Delta$ is a quantization step scale.

13. The apparatus of claim 10, wherein the minimum bound offset being equal to $\dfrac{O_0}{2^{S_0}}$ and the maximum bound offset being equal to $\dfrac{O_1}{2^{S_1}}$ , computing the inferior correction bound comprises :

   computing a first bound as (num+add)>>shift if shift >0 and as num<<-shift otherwise, wherein shift=$shift_\Delta$+S and num=$((abs(c_q)<<S)+O)*scale_\Delta$ with S=$S_0$ and O=$O_0$, where $c_q$ is the quantization level, add is an integer defined depending on a rounding strategy, $shift_\Delta$ is a quantization step shift and $scale_\Delta$ is a quantization step scale;
   computing a second bound (b1) as (num+add)>>shift if shift >0 and as num<<-shift otherwise, with S=Si and O=$O_1$; and
   setting the inferior correction bound equal to the first bound if $c_q$ >0 and to the opposite of the second bound otherwise.

14. The apparatus of claim 10 or 13, wherein the minimum bound offset being equal to $\dfrac{O_0}{2^{S_0}}$ and the maximum bound offset being equal to $\dfrac{O_1}{2^{S_1}}$ , computing the superior correction bound comprises :

   computing a first bound as (num+add)>>shift if shift >0 and as num<<-shift otherwise, wherein shift=$shift_\Delta$+S and num=$((abs(c_q)<<S)+O)*scale_\Delta$ with S=$S_0$ and O=$O_0$, where cq is the quantization level, add is an integer defined depending on a rounding strategy, $shift_\Delta$ is a quantization step shift and $scale_\Delta$ is a quantization step scale;
   computing a second bound (b1) as (num+add)>>shift if shift >0 and as num<<-shift otherwise, with S=Si and O=$O_1$; and
   setting the superior correction bound equal to the second bound if $c_q$ $\geq$ 0 and to the opposite of the first bound otherwise.

15. The apparatus of any one of claims 10 to 14, wherein applying a correction function to the transform coefficient based on the computed inferior and superior correction bounds comprises applying the correction function to a symmetrized coefficient based on the computed inferior and superior correction bounds, the symmetrized coefficient being equal to the transform coefficient if the quantization level is greater than or equal to zero and to the opposite of the transform coefficient otherwise.

16. The apparatus of claim 15, wherein the minimum bound offset being equal to $\dfrac{O_0}{2^{S_0}}$ and the maximum bound offset being equal to $\dfrac{O_1}{2^{S_1}}$, computing the inferior and superior correction bounds comprises :

    computing a first bound as (num+add)>>shift if shift >0 and as num<<-shift otherwise, wherein shift=shift$_\Delta$+S and num=((abs($c_q$)<<S)+O)*scale$_\Delta$ with S=S$_0$ and O=O$_0$, where $c_q$ is the quantization level, add is an integer defined depending on a rounding strategy, shift$_\Delta$ is a quantization step shift and scale$_\Delta$ is a quantization step scale;
    computing a second bound as (num+add)>>shift if shift >0 and as num<<-shift otherwise, with S=Si and O=O$_1$; and
    setting the superior correction bound equal to the second bound and setting the inferior correction bound to the opposite of the second bound if $c_q$ is null and to the first bound otherwise.

17. The apparatus of claim 15, wherein the minimum bound offset being equal to $\dfrac{O_0}{2^{S_0}}$ and the maximum bound offset being equal to $\dfrac{O_1}{2^{S_1}}$, computing inferior and superior correction bounds comprises :

    computing the superior correction bound as (num+add)>>shift if shift >0 and as num«-shift otherwise, wherein shift=shift$_\Delta$+S and num=((abs($c_q$)<<S)+O)*scale$_\Delta$ with S=Si and O=O$_1$,
    where $c_q$ is the quantization level, add is an integer defined depending on a rounding strategy, shift$_\Delta$ is a quantization step shift and scale$_\Delta$ is a quantization step scale; and
    computing the inferior correction bound as (num+add)»shift if shift >0 and as num<<-shift otherwise, with S=Si and O=-Oi if $c_q$ is null and with S=S$_0$ and O=O$_0$ otherwise.

18. The apparatus of any one of claims 11 to 17, wherein in a case where the correction function is applied to a filtering difference transform coefficient, num is set equal to O*scale$_\Delta$.

**FIG. 1**

EP 4 679 831 A1

FIG. 2

**FIG. 3**

**FIG. 4A**

EP 4 679 831 A1

FIG. 4B

**FIG.5**

**FIG.6**

**FIG.7**

**FIG.8**

**FIG. 9**

**FIG. 10**

EP 4 679 831 A1

EP 4 679 831 A1

100

| | |
|---|---|
| Compute an inferior correction bound and a superior correction bound from quantization step parameters, a quantization level, minimum and maximum bound offsets each equal to a ratio between an integer offset parameter and an integer power of two | S102 |

| | |
|---|---|
| Apply a correction function to the transform coefficient based on the computed inferior and superior correction bounds. | S104 |

# FIG. 11

- Integer bound offset parameter: O
- Shift parameter of the bound offset: S
- Quantization step scale parameters: $scale_\Delta$
- Quantization step shift parameters: $shift_\Delta$
- Quantization level: $c_q$

start

S112

S110

Compute bound shift:
$shift = shift_\Delta + S$

Compute bound numerator:
$num = ((c_q << S) + O) * scale_\Delta$

S116

S114

Compute add depending on
rounding strategy
(e.g., add=1<<(shift-1) for
rounding to the closest integer)

shift>0?

yes

no

$b(c_q) = (num + add) >> shift$

$b(c_q) = num << -shift$

end

**FIG. 12**

EP 4 679 831 A1

- Bound offset parameters $O_0$, $S_0$, $O_1$, $S_1$
- Quantization step parameters $scale_\Delta$, $shift_\Delta$
- Quantization level $c_q$
- Transform coefficient $c_f$

start

S210

$c_q > 0$?

no

yes

$S = S_1$
$O = -O_1$

$S = S_0$
$O = O_0$

S214

$c_q \geq 0$?

no

yes

$S = S_0$
$O = -O_0$

$S = S_1$
$O = O_1$

S212

Compute $b_{inf}$ (inferior correction bound associated to $c_q$) using bound offset parameters O and S

S216

Compute $b_{sup}$ (superior correction bound associated to $c_q$) using bound offset parameters O and S

S218

Apply correction function to the transform coefficient
$\widehat{c_f} = corr(c_f, b_{inf}, b_{sup})$

end

**FIG. 13**

- Bound offset parameters $O_0$, $S_0$, $O_1$, $S_1$
- Quantization step parameters $scale_\Delta$, $shift_\Delta$
- Quantization level $c_q$
- Transform coefficient $c_f$

start

S310

Compute first bound $b_0$ associated to $abs(c_q)$ using bound offset parameters $O_0$ and $S_0$

S312

Compute second bound $b_1$ associated to $abs(c_q)$ using bound offset parameters $O_1$ and $S_1$

S314

$c_q > 0$?

no → $b_{inf} = -b_1$

yes → $b_{inf} = b_0$

S316

$c_q \geq 0$?

no → $b_{sup} = -b_0$

yes → $b_{sup} = b_1$

S318

Apply correction function to the transform coefficient
$\hat{c}_f = corr(c_f, b_{inf}, b_{sup})$

end

**FIG. 14**

EP 4 679 831 A1

**FIG. 15**

- Bound offset parameters $O_0$, $S_0$, $O_1$, $S_1$
- Quantization step parameters $scale_\Delta$, $shift_\Delta$
- Quantization level $c_q$
- Transform coefficient $c_f$

start

S312

S310  Compute first bound $b_0$ associated to abs($c_q$) using bound offset parameters $O_0$ and $S_0$

Compute second bound $b_1$ associated to abs($c_q$) using bound offset parameters $O_1$ and $S_1$

S410

no  $c_q>=0?$  yes

$c_f^{sym} = -c_f$    $c_f^{sym} = c_f$

S412  no  $c_q==0?$  yes

$b_{inf}=b_0$    $b_{inf}=-b_1$

S414

$b_{sup}=b_1$

S416  Apply correction function to the symmetrized transform coefficient

$$\widetilde{c_f^{sym}} = corrr(c_f^{sym}, b_{inf}, b_{sup})$$

S418  no  $c_q>=0?$  yes

$\hat{c}_f = -\widetilde{c_f^{sym}}$    $\hat{c}_f = \widetilde{c_f^{sym}}$

end

# FIG. 16

- Bound offset parameters $O_0$, $S_0$, $O_1$, $S_1$
- Quantization step parameters $scale_\Delta$, $shift_\Delta$
- Quantization level $c_q$
- Transform coefficient $c_f$

start

S510

$c_q == 0?$

no | yes

$S_{inf}=S_0$
$O_{inf}=O_0$

$S_{inf}=S_1$
$O_{inf}=-O_1$

$S_{sup}=S_1$
$O_{sup}=O_1$

S410

$c_q >= 0?$

no | yes

$c_f^{sym} = -c_f$

$c_f^{sym} = c_f$

S512

Compute inferior correction bound $b_{inf}$ associated to $abs(c_q)$ using bound offset parameters $O_{inf}$ and $S_{inf}$

S514

Compute superior correction bound $b_{sup}$ associated to $abs(c_q)$ using bound offset parameters $O_{sup}$ and $S_{sup}$

S416

Apply correction function to the symmetrized transform coefficient
$$\widehat{c_f^{sym}} = corr(c_f^{sym}, b_{inf}, b_{sup})$$

S418

$c_q >= 0?$

no | yes

$\widehat{c_f} = -\widehat{c_f^{sym}}$

$\widehat{c_f} = \widehat{c_f^{sym}}$

end

**FIG. 17**

40

- Integer bound offset parameter: $O$
- Shift parameter of the bound offset: $S$
- Quantization step scale parameters: $scale_\Delta$
- Quantization step shift parameters: $shift_\Delta$
- Quantization level: $c_q$

start

S610 — Compute bound numerator: $num = O * scale_\Delta$

S112 — Compute bound shift: $shift = shift_\Delta + S$

S116 — Compute add depending on rounding strategy (e.g., $add = 1 << (shift-1)$ for rounding to the closest integer)

S114 — shift > 0?

yes → $b(c_q) = (num + add) >> shift$

no → $b(c_q) = num << -shift$

end

**FIG. 18**

# EP 4 679 831 A1

**EUROPEAN SEARCH REPORT**

Europäisches Patentamt
European Patent Office
Office européen des brevets

**Application Number**

EP 24 30 6155

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/112725 A1 (KAO MENG-PING [US] ET AL) 21 April 2016 (2016-04-21)<br>* figure 9 *<br>* paragraph [0115] *<br>----- | 1-18 | INV.<br>H04N19/48<br>H04N19/60<br>H04N19/82 |
| A | ROSEWARNE C ET AL: "Errata report items for VVC, HEVC, AVC, Video CICP, and CP usage TR",<br>23. JVET MEETING; 20210707 - 20210716; TELECONFERENCE; (THE JOINT VIDEO EXPLORATION TEAM OF ISO/IEC JTC1/SC29/WG11 AND ITU-T SG.16 ),<br>,<br>no. JVET-W1004 ; m57737<br>28 September 2021 (2021-09-28),<br>XP030297607,<br>Retrieved from the Internet:<br>URL:https://jvet-experts.org/doc_end_user/documents/23_Teleconference/wg11/JVET-W1004-v1.zip<br>JVET-W1004-v1_attachment_HEVC.docx<br>[retrieved on 2021-09-28]<br>* sections 8.6.2 and 8.6.3 *<br>----- | 1-18 | |
| A | WO 2016/123513 A1 (QUALCOMM INC [US]) 4 August 2016 (2016-08-04)<br>* paragraph [0019] *<br>----- | 1-18 | **TECHNICAL FIELDS SEARCHED (IPC)**<br><br>H04N |
| X | US 2013/114685 A1 (KEROFSKY LOUIS JOSEPH [US] ET AL) 9 May 2013 (2013-05-09)<br>* paragraph [0040] *<br>----- | 1-18 | |

The present search report has been drawn up for all claims

| Place of search | Date of completion of the search | Examiner |
|---|---|---|
| Munich | 6 December 2024 | Regidor Arenales, R |

## ANNEX TO THE EUROPEAN SEARCH REPORT
## ON EUROPEAN PATENT APPLICATION NO.

EP 24 30 6155

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2024

| Patent document cited in search report | | | Publication date | Patent family member(s) | | Publication date |
|---|---|---|---|---|---|---|
| US 2016112725 | A1 | | 21-04-2016 | BR | PI0717936 A2 | 03-12-2013 |
| | | | | CN | 101543076 A | 23-09-2009 |
| | | | | CN | 104902278 A | 09-09-2015 |
| | | | | CN | 105357527 A | 24-02-2016 |
| | | | | CN | 105357528 A | 24-02-2016 |
| | | | | CN | 105357529 A | 24-02-2016 |
| | | | | CN | 105376567 A | 02-03-2016 |
| | | | | CN | 105376572 A | 02-03-2016 |
| | | | | CN | 105376573 A | 02-03-2016 |
| | | | | CN | 105376574 A | 02-03-2016 |
| | | | | CN | 105392003 A | 09-03-2016 |
| | | | | CN | 105392004 A | 09-03-2016 |
| | | | | CN | 105392005 A | 09-03-2016 |
| | | | | CN | 105392006 A | 09-03-2016 |
| | | | | CN | 105392007 A | 09-03-2016 |
| | | | | CN | 105407355 A | 16-03-2016 |
| | | | | CN | 105430398 A | 23-03-2016 |
| | | | | CN | 105430399 A | 23-03-2016 |
| | | | | EP | 2082583 A2 | 29-07-2009 |
| | | | | EP | 4224853 A1 | 09-08-2023 |
| | | | | HK | 1214706 A1 | 29-07-2016 |
| | | | | HK | 1222076 A1 | 16-06-2017 |
| | | | | HK | 1222077 A1 | 16-06-2017 |
| | | | | HK | 1222494 A1 | 30-06-2017 |
| | | | | JP | 5801032 B2 | 28-10-2015 |
| | | | | JP | 2010509842 A | 25-03-2010 |
| | | | | US | 2009257664 A1 | 15-10-2009 |
| | | | | US | 2016112725 A1 | 21-04-2016 |
| | | | | US | 2017238021 A1 | 17-08-2017 |
| | | | | US | 2021337241 A1 | 28-10-2021 |
| | | | | US | 2024244270 A1 | 18-07-2024 |
| | | | | WO | 2008057308 A2 | 15-05-2008 |
| WO 2016123513 | A1 | | 04-08-2016 | AU | 2016211272 A1 | 13-07-2017 |
| | | | | BR | 112017016337 A2 | 27-03-2018 |
| | | | | CN | 107211139 A | 26-09-2017 |
| | | | | EA | 201791496 A1 | 30-11-2017 |
| | | | | EP | 3251355 A1 | 06-12-2017 |
| | | | | ES | 2873548 T3 | 03-11-2021 |
| | | | | JP | 6710691 B2 | 17-06-2020 |
| | | | | JP | 2018507623 A | 15-03-2018 |
| | | | | KR | 20170108965 A | 27-09-2017 |
| | | | | TN | 2017000297 A1 | 16-01-2019 |
| | | | | TW | 201633782 A | 16-09-2016 |
| | | | | US | 2016227247 A1 | 04-08-2016 |
| | | | | WO | 2016123513 A1 | 04-08-2016 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 30 6155

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2024

| Patent document cited in search report | Publication date | Patent family member(s) | Publication date |
|---|---|---|---|
| US 2013114685 A1 | 09-05-2013 | NONE | |

For more details about this annex : see Official Journal of the European Patent Office, No. 12/82

page 2 of 2